# EUROPEAN PATENT APPLICATION

(11) **EP 4 539 475 A1**
(43) Date of publication of application: **16.04.2025**
(21) Application number: 23893351.9
(22) Date of filing: 06.09.2023
(51) Int. Cl.: H04N 21/431

(54) **INFORMATION PROCESSING METHOD AND RELATED DEVICE**

(30) Priority: 22.11.2022 CN 202211468016
(71) Applicant: Honor Device Co., Ltd., Shenzhen, Guangdong 518040 (CN)
(72) Inventor: SONG, Wenxuan, Shenzhen, Guangdong 518040 (CN); WANG, Long, Shenzhen, Guangdong 518040 (CN); QUAN, Ruilin, Shenzhen, Guangdong 518040 (CN); SONG, Xiaoxu, Shenzhen, Guangdong 518040 (CN)
(74) Representative: Thun, Clemens
(86) International application number: PCT/CN2023/117296
(87) International publication number: WO 2024/109258

(57) **Abstract**

Embodiments of this application provide an information processing method and a related device. According to the method, an electronic device may display a note interface while playing a video, process the video, and then automatically display a processing result in a note, and may further record other information in the note, and view the recorded information. The electronic device may further extract text on a web page, and automatically store the extracted text in the note. The information herein includes but is not limited to voice information, text information, image information, and the like. The recorded information may include information entered by a user, text information obtained by converting a voice, a recorded video, a screenshot of a played video, and content that is obtained after editing based on the entered information and that is used as content in the note. **In** this manner, efficiency of obtaining information and recording information by using the electronic device can be greatly improved.

## Description

This application claims priority to Chinese Patent Application No. 202211468016.6, filed with the China National Intellectual Property Administration on November 22, 2022 and entitled "INFORMATION PROCESSING METHOD AND RELATED DEVICE", which is incorporated herein by reference in its entirety.

### TECHNICAL FIELD

This application relates to the field of terminal technologies, and in particular, to an information processing method and a related device.

### BACKGROUND

As functions of electronic devices are gradually improved, more electronic devices can not only meet communication requirements of users, but also provide a plurality of channels for obtaining external information and various ways of entertainment for the users. For example, the user may obtain information by watching a video or browsing a web page, or in another manner. In addition, compared with a paper form-based information recording manner, the electronic device may provide a more convenient information recording manner. The electronic device supports instant recording of a variety of information and deletion, modification, and sharing of recorded information, and may further support a plurality of recording forms (for example, text, an image, and a video). For example, a Notepad application in the electronic device may be used to record some memo information, matters, notes, and the like, and may be further used to collect some useful data that is about daily life and a learning process and that is obtained from another application (for example, a news application).

That is, the electronic device is a tool for obtaining information and recording information. While obtaining information by using the electronic device, the user may record the obtained information. In an actual operation process, this manner of recording information while obtaining information involves a plurality of applications in the electronic device, and is still not convenient enough.

Therefore, how to improve efficiency of obtaining information and recording information by using the electronic device is an urgent problem to be resolved currently.

### SUMMARY

This application provides an information processing method and a related device. According to the method, an electronic device may display a note interface while playing a video, process the video, and then automatically display a processing result in a note, and may further record other information in the note, and view the recorded information. The electronic device may further extract text on a web page, and automatically store the extracted text in the note. In this manner, efficiency of obtaining information and recording information by using the electronic device can be greatly improved.

According to a first aspect, this application provides an information processing method. The method may include: An electronic device may display a first interface, where the first interface may include a first area, a second area, and a video processing control; the electronic device may process a first video in response to an operation on the video processing control; and the electronic device generates a processing result for the first video, and then automatically displays the processing result in the second area. A first image in the first video in a playing state may be displayed in the first area. The second area may be used to edit and record information.

**In** the solution provided in this application, the electronic device may support processing of a played video while playing the video in the first area, and support automatic display of a processing result in the second area. The second area may be used to edit and record information. In this manner, the electronic device may independently display, in the second area, the processing result for the video played in the first area, so that a user does not need to independently perform an operation in the first area and the second area, to improve information recording efficiency.

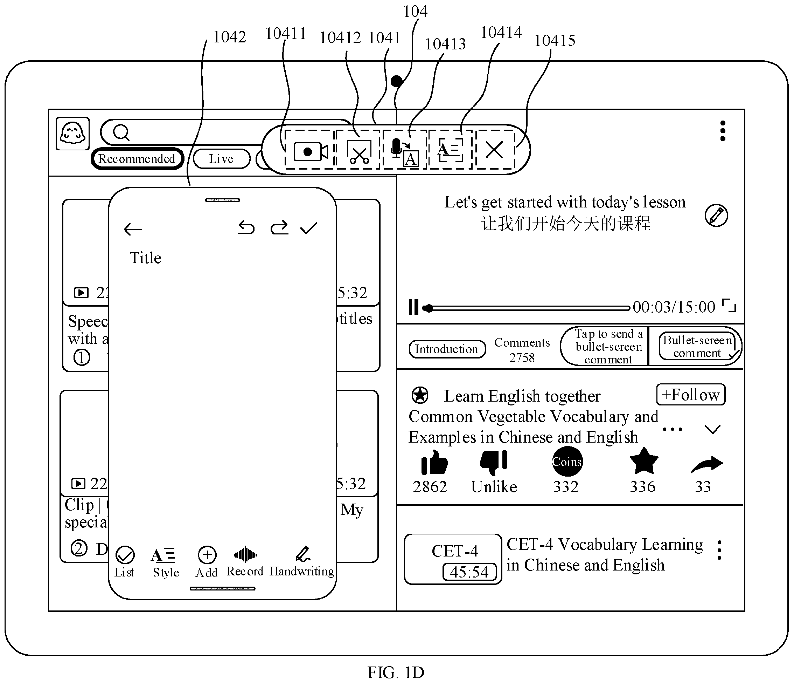

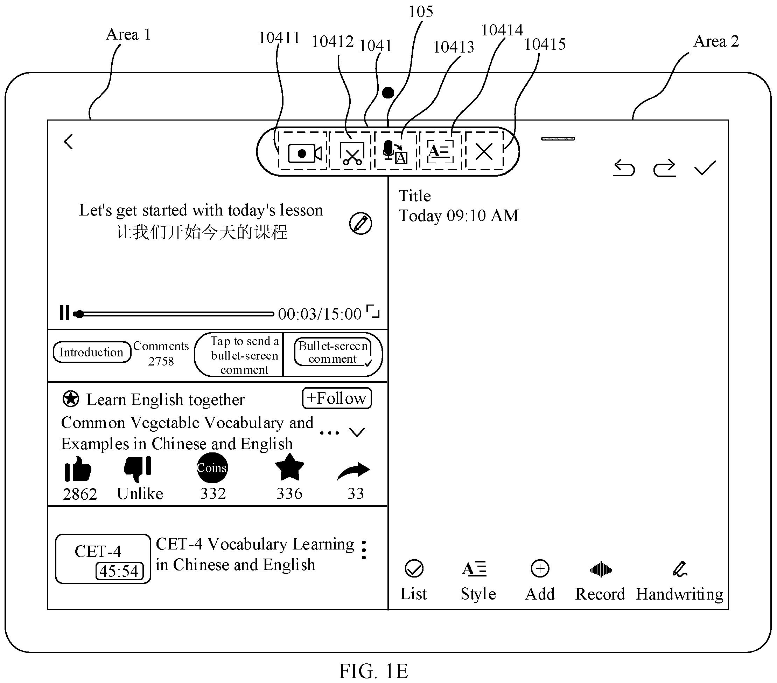

In some embodiments of this application, the first interface may be a user interface 104 shown in FIG. 1D. In some other embodiments of this application, the first interface may be a user interface 105 shown in FIG. 1E.

In some embodiments of this application, the first area may be an area 1, and the second area may be an area 2. In some embodiments of this application, the first area may alternatively be a video play area 20211.

In some embodiments of this application, the second area may be a floating window 1042.

It may be understood that the first area and the second area may be display areas of different applications.

In some embodiments of this application, the first area and the second area may alternatively be display areas of a same application. In this case, the application may play a video, and may further record information.

With reference to the first aspect, in a possible implementation, before the electronic device generates the processing result for the first video, and then automatically displays the processing result in the second area, the method may further include: automatically displaying a current processing status in the second area in a process in which the electronic device processes the first video.

In the solution provided in this application, the electronic device can automatically display, in the second area, the processing result for the first video after generating the processing result, and can further automatically display the current processing status in the second area in the process in which the electronic device processes the first video. In this manner, the user can see the processing result of the electronic device in real time. Once a problem occurs in a processing process, the user may change or stop processing of the first video in a timely manner, to save time.

With reference to the first aspect, in a possible implementation, the video processing control includes a first control in a first state. That the electronic device processes a first video in response to an operation on the video processing control may specifically include: In response to an operation on the first control in the first state, the electronic device may switch a status of the first control to a second state, and record an image that is in the first video and that is displayed in the first area. The automatically displaying a current processing status in the second area in a process in which the electronic device processes the first video may specifically include: automatically displaying a first card in the second area in a process in which the electronic device records the image that is in the first video and that is displayed in the first area. That the electronic device generates a processing result for the first video may specifically include: In response to an operation on the first control in the second state, the electronic device may switch the status of the first control to the first state, stop recording the image in the first area, and generate a second video. The automatically displaying the processing result in the second area may specifically include: automatically displaying the second video in the first card.

In the solution provided in this application, the electronic device may support video recording while playing a video, automatically generate an excerpted card (for example, the first card) in the second area (for example, a note interface of a note-taking application) in a recording process, and automatically generate a recorded video in the excerpted card after recording ends, to improve information recording efficiency. In this case, the electronic device may further support the user in entering other information in the card or a non-card area of a note interface in which the card is located.

It may be understood that the first card is an excerpted card. Specifically, the first card may be a card 1. The first video may be a video S. The second video may be an excerpted video described below.

According to this implementation, that the electronic device processes a first video may mean that the electronic device records the first video. The processing result may refer to a recorded video (which may be briefly referred to as a recorded video). In a recording process, the electronic device may automatically display, in the second area, text, an image, and the like that indicate that the current processing status of the electronic device is a recording state. After recording ends and the recorded video is generated, the electronic device may automatically display the recorded video in the second area.

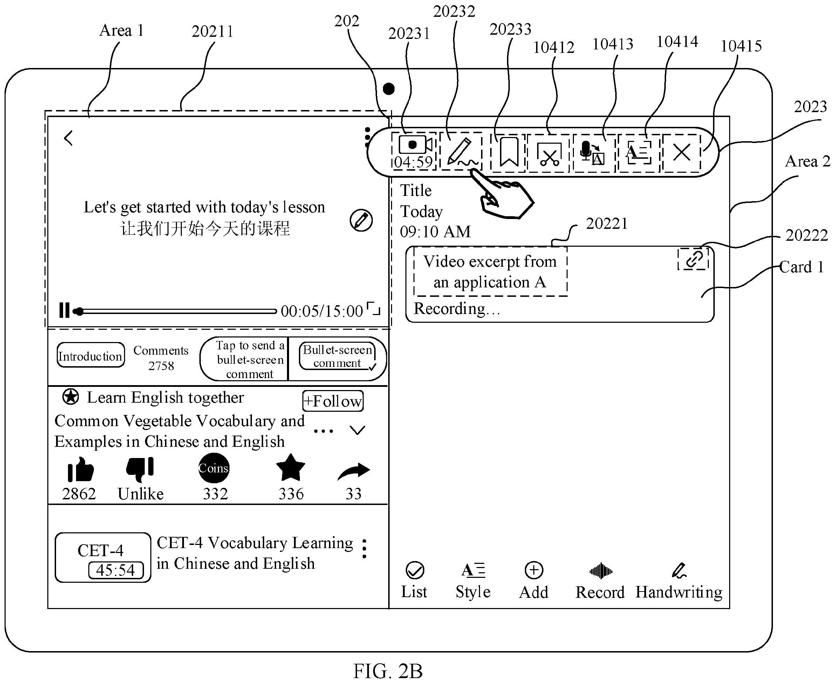

For example, when the current processing status is the video recording state, the electronic device may display user interfaces shown in FIG. 2B-FIG. 2R. A split-screen area in a right-half part in each of these user interfaces is the second area in which the current processing status is automatically displayed. As shown in FIG. 2B, the electronic device may display the card 1 in the area 2, and a word "recording" may be displayed in the card 1, indicating that the electronic device is currently still in the video recording state.

With reference to the first aspect, in a possible implementation, the video processing control may include a first control in a first state. That the electronic device processes a first video in response to an operation on the video processing control may specifically include: In response to an operation on the first control in the first state, the electronic device may switch a status of the first control to a second state, and record an image that is in the first video and that is displayed in the first area. That the electronic device generates a processing result for the first video may specifically include: In response to an operation on the first control in the second state, the electronic device may switch the status of the first control to the first state, stop recording the image in the first area, and generate a second video. The automatically displaying the processing result in the second area may specifically include: automatically displaying the second video in a first card in the second area.

In the solution provided in this application, the electronic device may support video recording while playing a video, and automatically generate a recorded video in an excerpted card in the second area after recording ends, to improve information recording efficiency.

In some embodiments of this application, in response to the operation on the first control in the first state, the electronic device may generate the first card in the second area, but does not display a current processing status in the first card in a recording process, and displays a recorded video in the first card only after recording ends.

In some embodiments of this application, the electronic device may alternatively generate, in the second area after recording ends, an excerpted card that includes the recorded video.

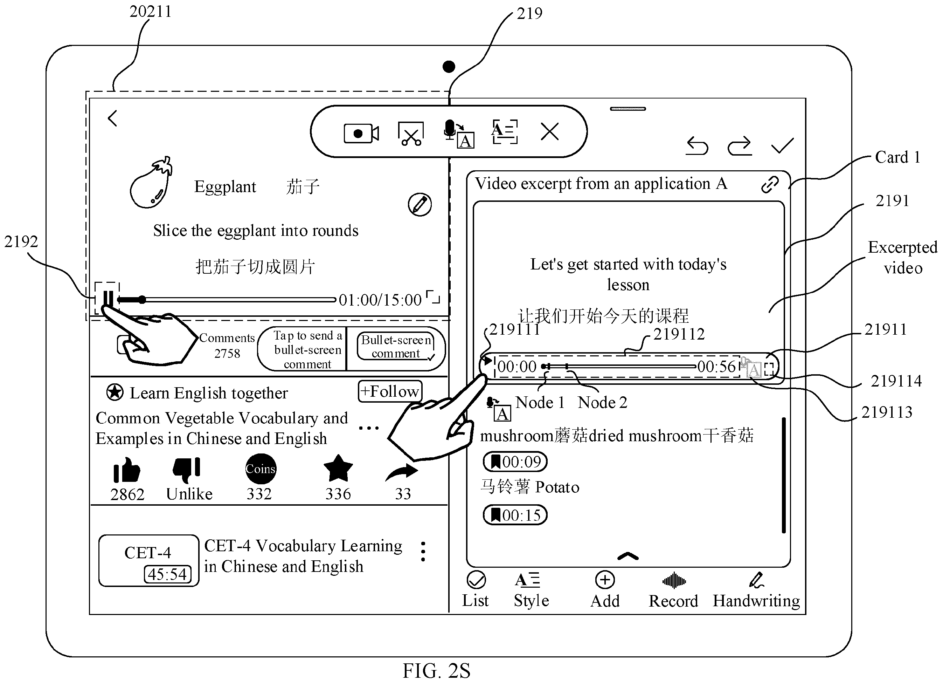

It may be understood that the first state may be understood as a non-recording state, and the second state may be understood as a recording state. In some embodiments of this application, the first control in the first state may be a recording start control 10411, and the first control in the second state may be a recording end control 20231. The first video may be a video S. The second video may be an excerpted video (as shown in FIG. 2S).

With reference to the first aspect, in a possible implementation, the method may further include: The electronic device may display a second control in a third state in response to an operation on the first control in the first state; and in the process of recording the image that is in the first video and that is displayed in the first area, in response to an operation on the second control in the third state, the electronic device may switch a status of the second control to a fourth state, and display several color options, and in response to an operation on the image that is in the first video and that is displayed in the first area, may display a doodle mark in a first color on the image in the first video. The first color is a default color option in the several color options. The second video includes an image that includes the doodle mark in the first color.

In the solution provided in this application, in the process of recording the image that is in the first video and that is displayed in the first area, the user may directly doodle on the image displayed in the first video, and the doodle mark may be stored in the recorded video.

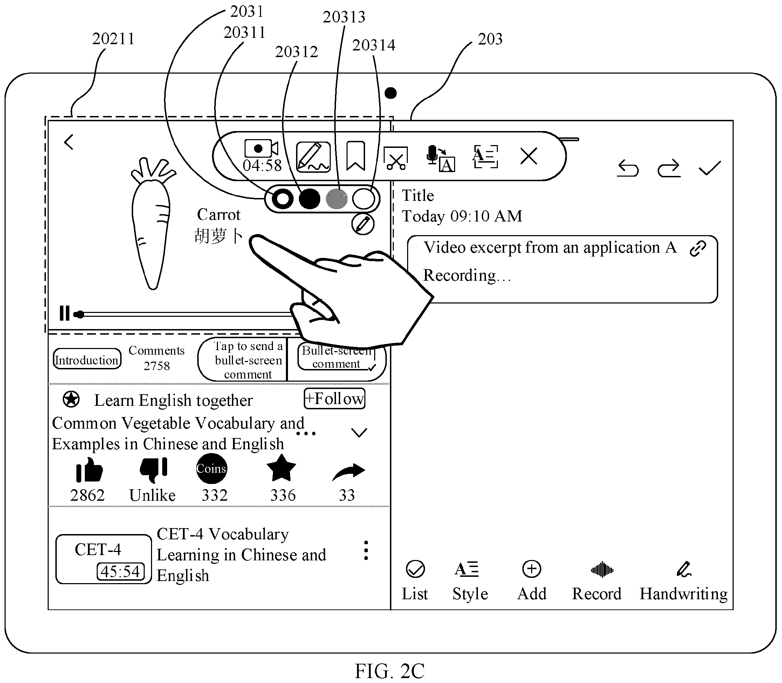

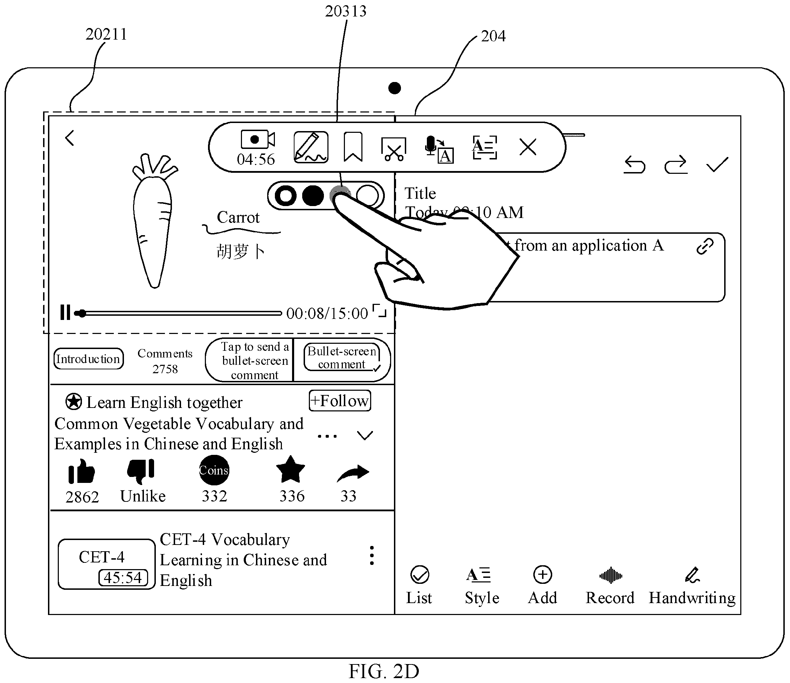

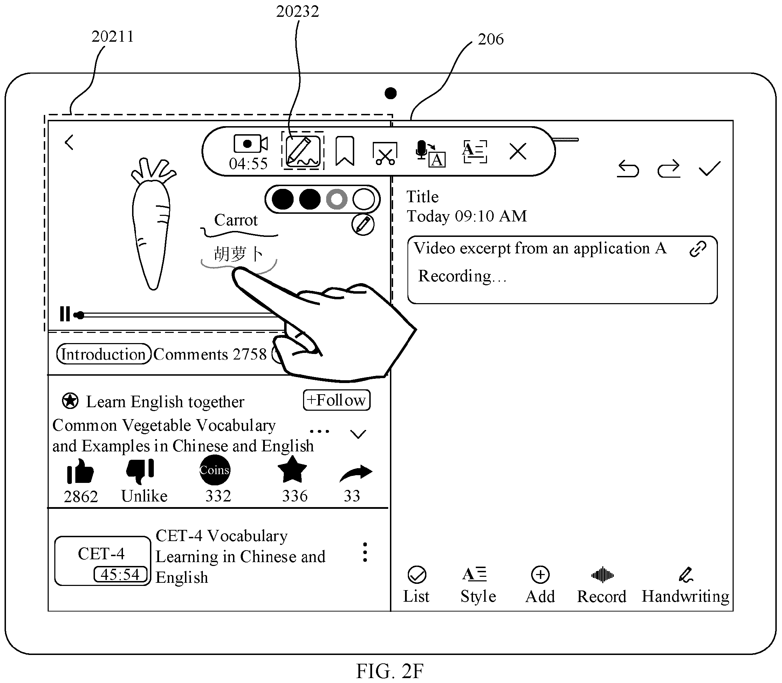

It may be understood that the third state may be understood as a state in which doodling is disabled, and the second state may be understood as a state in which doodling is enabled. In some embodiments of this application, the second control in the third state may be a doodle control 20232 shown in FIG. 2B, and the second control in the fourth state may be a doodle control 20232 with a highlighted background (as shown in FIG. 2F), or may be a doodle control 20232 with a color changing to blue. The several color options may refer to brush colors corresponding to a control 20311, a control 20312, a control 20313, and a control 20314 in a color selection control 2031. The first color may be the brush color corresponding to the control 20311. For details of this part of content, refer to related descriptions in FIG. 2C and FIG. 2D. Details are not described herein.

In some embodiments of this application, the electronic device may switch a doodle color in response to an operation on the several color options. For details of this part of content, refer to related descriptions in FIG. 2D-FIG. 2E. Details are not described herein.

With reference to the first aspect, in a possible implementation, the method may further include: The electronic device may display a third control in response to an operation on the first control in the first state; and at a first moment in the process of recording the image that is in the first video and that is displayed in the first area, in response to an operation on the third control, the electronic device may add a first time label and a first text addition area to the first card. The first moment is displayed on the first time label, and the first text addition area is used to input text.

In the solution provided in this application, the electronic device may add a time label to a video that is being recorded, and the time label may be automatically added to the second area, to facilitate subsequent quick viewing of video content corresponding to the time label.

In some embodiments of this application, the third control may be a label control 20233, the first moment in the process of recording the image that is in the first video and that is displayed in the first area may be a 9th second during video recording, the first time label may be a time label 20811, and the first text addition area may be a text addition area 20812.

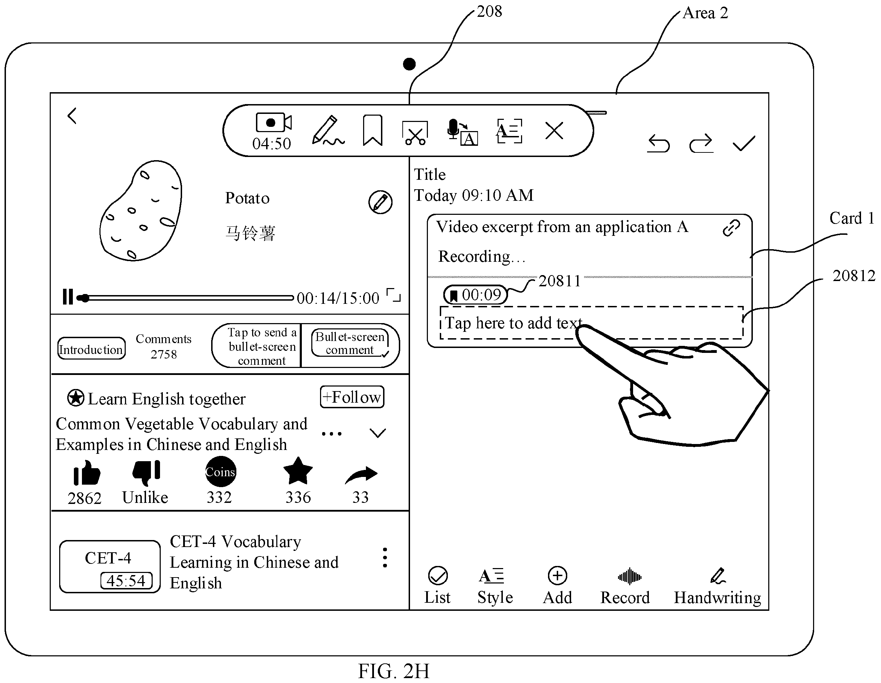

It may be understood that the first text addition area may be used to input text. For details, refer to related descriptions in FIG. 2H-FIG. 2J. Details are not described herein.

With reference to the first aspect, in a possible implementation, the method may further include: The electronic device may display a fourth control in response to an operation on the first control in the first state; and at a second moment, at which a second image is displayed in the first area, in the process of recording the image that is in the first video and that is displayed in the first area, in response to an operation on the fourth control, the electronic device may capture the second image, and automatically add the second image to the first card.

In the solution provided in this application, the electronic device may capture an image displayed in the first video instead of an image displayed on an entire screen, and the obtained image may be directly and automatically added to the second area. In this way, the user does not need to manually select a to-be-captured image from a Gallery application and then add the image to the second area, to save time and improve information recording efficiency. In addition, because the image in the first area instead of the image on the entire screen is captured, the user may obtain a more concise and intuitive image. Furthermore, the captured image may be automatically displayed in the excerpted card, to facilitate subsequent centralized viewing of notes in the card.

In some embodiments of this application, the second image may be an image in the first video at the second moment.

In some embodiments of this application, the fourth control may be a screenshot control 10412, and the second image may be a screenshot 21112.

With reference to the first aspect, in a possible implementation, the method may further include: At the second moment in the process of recording the image that is in the first video and that is displayed in the first area, in response to an operation on the fourth control, the electronic device may add a second time label and a second text addition area to the first card. The second moment is displayed on the second time label, and the second text addition area is used to input text.

In the solution provided in this application, the electronic device may further add a time label and a text addition area to a screenshot in the recording process, to facilitate quick viewing of the screenshot during subsequent video play.

In some embodiments of this application, the second moment may be a 15th second during video recording, the second time label may be a time label 21111, and the second text addition area may be a text addition area 21113.

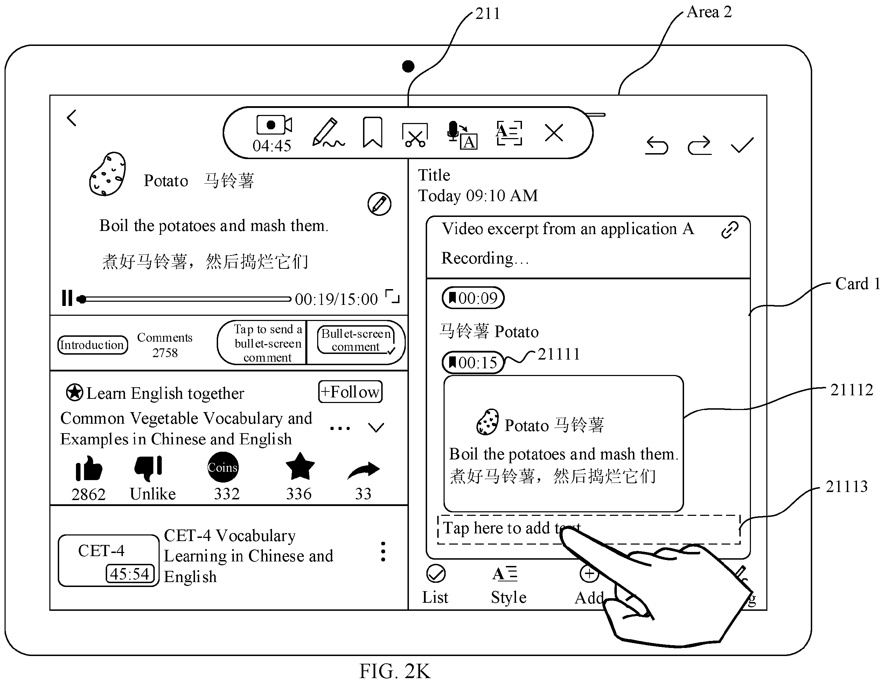

It may be understood that the second text addition area may be used to input text. For details, refer to related descriptions in FIG. 2K-FIG. 2M. Details are not described herein.

With reference to the first aspect, in a possible implementation, the method may further include: The electronic device may display a fifth control in a fifth state in the process of recording the image that is in the first video and that is displayed in the first area; the electronic device may switch a status of the fifth control to a sixth state in response to an operation on the fifth control in the fifth state; and when the electronic device displays the fifth control in the sixth state, the electronic device may collect a first voice, and display, in the first card, text obtained by converting the first voice.

In the solution provided in this application, the electronic device may collect sound information of the first video, convert the sound information into text, and automatically display the text in the second area. In this way, time for manual input by the user can be saved, and information recording efficiency can be improved.

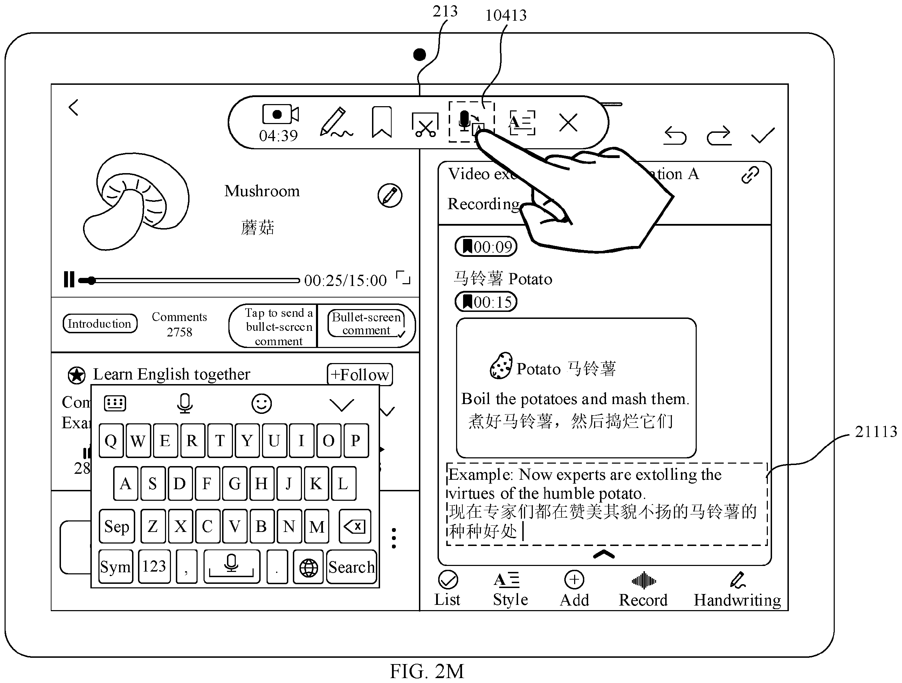

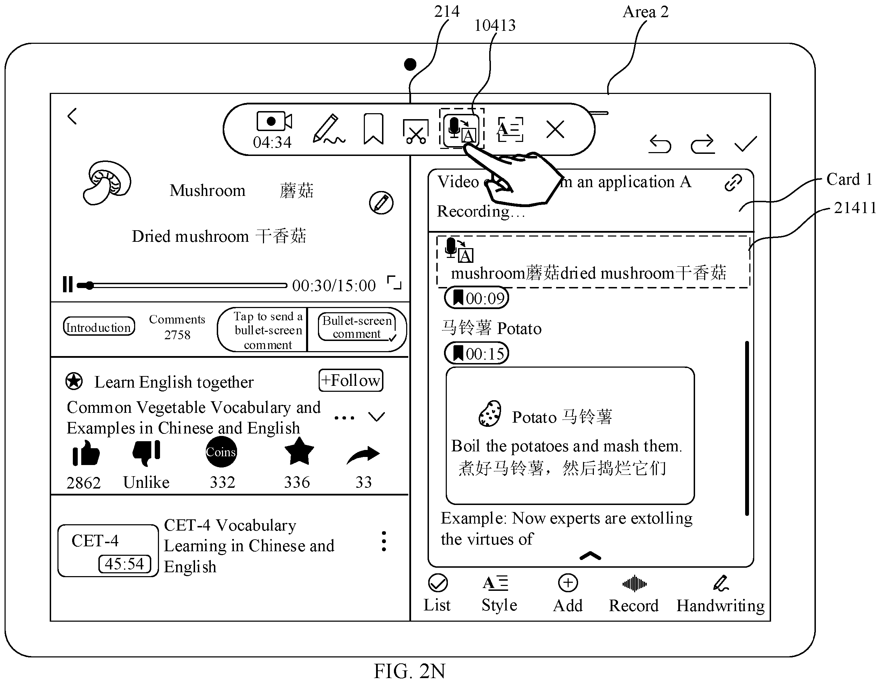

It may be understood that the fifth state may be understood as a state in which a voice-to-text conversion function is disabled, and the sixth state may be understood as a state in which the voice-to-text conversion function is enabled. In some embodiments of this application, the fifth control in the fifth state may be a voice-to-text conversion control 10413 shown in FIG. 2M, and the fifth control in the sixth state may be a voice-to-text conversion control 10413 with a highlighted background (as shown in FIG. 2N), or may be a voice-to-text conversion control 10413 with a color changing to blue. In this case, the electronic device may display, in a voice-to-text conversion area 21411 in the card 1, the text obtained by converting the first voice.

With reference to the first aspect, in a possible implementation, the method may further include: The electronic device may display a sixth control in a seventh state in the process of recording the image that is in the first video and that is displayed in the first area; at a third moment at which a third image in the first video is displayed in the first area, in response to an operation on the sixth control in the seventh state, the electronic device may switch a status of the sixth control to an eighth state, extract text in the third image, and display a first text area in the first area; and at a fourth moment at which when the electronic device displays the sixth control in the eighth state, a fourth image in the first video is displayed in the first area, and the first text area is displayed in the first area, in response to an operation on the first text area, the electronic device may display several editing options. The first text area includes the text that is in the third image and that is extracted by the electronic device. The several editing options are used to edit text in the first text area. The fourth moment is later than the third moment.

In the solution provided in this application, the electronic device may extract text in a video that is being played, and support editing (for example, selecting all, copying, and insertion into a note) of the text, to save time for manual input by the user and improve information recording efficiency.

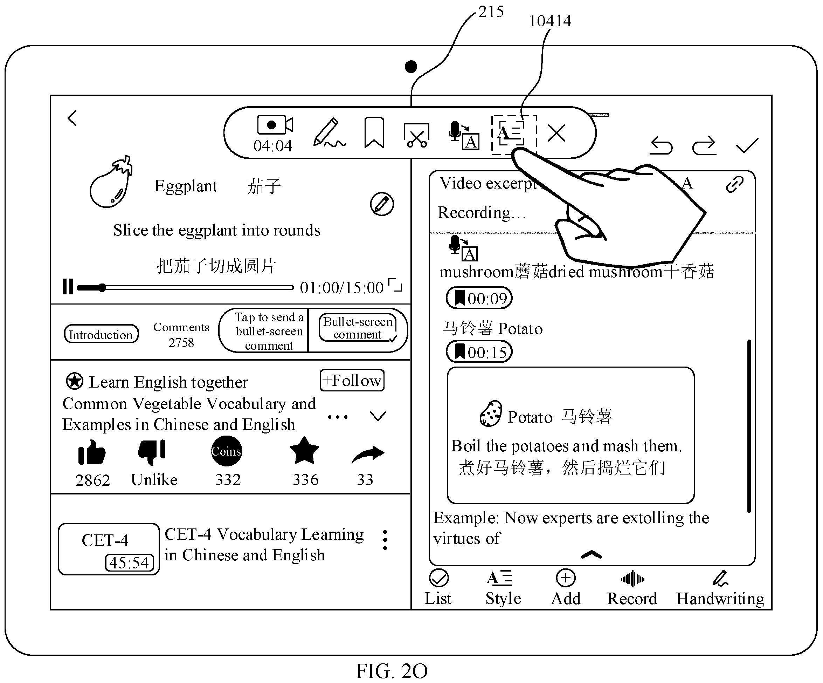

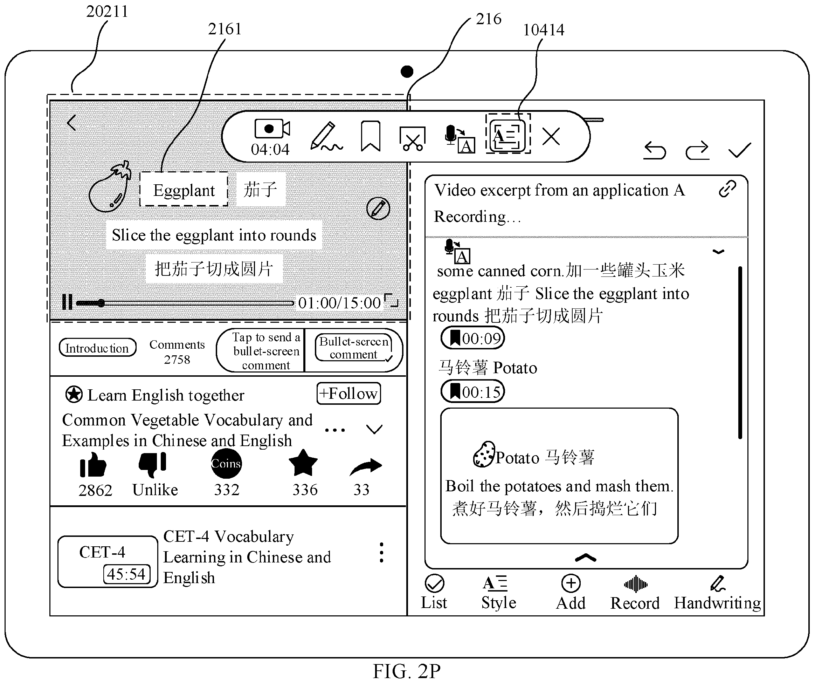

It may be understood that the seventh state may be understood as a state in which a text extraction function for a video picture is disabled, and the eighth state may be understood as a state in which the text extraction function for a video picture is enabled. In some embodiments of this application, the sixth control in the seventh state may be a text extraction control 10414 shown in FIG. 2O, and the sixth control in the eighth state may be a text extraction control 10414 with a highlighted background (as shown in FIG. 2P), or may be a text extraction control 10414 with a color changing to blue.

In some embodiments of this application, the third moment may be a moment at which the electronic device displays a user interface 215 shown in FIG. 2O, the third image may be an image that is in the video S and that is displayed in a split-screen area in a left-half part shown in FIG. 2O, the text in the third image may include text 2161, and the first text area may be an area in which the text 2161 is located.

In some embodiments of this application, the several editing options may be editing options included in an editing option area 2171.

With reference to the first aspect, in a possible implementation, the video processing control may include the fourth control. That the electronic device processes a first video in response to an operation on the video processing control; and the electronic device generates a processing result for the first video, and then automatically displays the processing result in the second area may specifically include: At a fifth moment at which a fifth image in the first video is displayed in the first area, in response to an operation on the fourth control, the electronic device may capture the fifth image, and automatically add the fifth image to a non-card area in the second area.

In the solution provided in this application, when no video recording is performed, the electronic device may also capture a picture in a video that is being played, and automatically display the captured image in the second area.

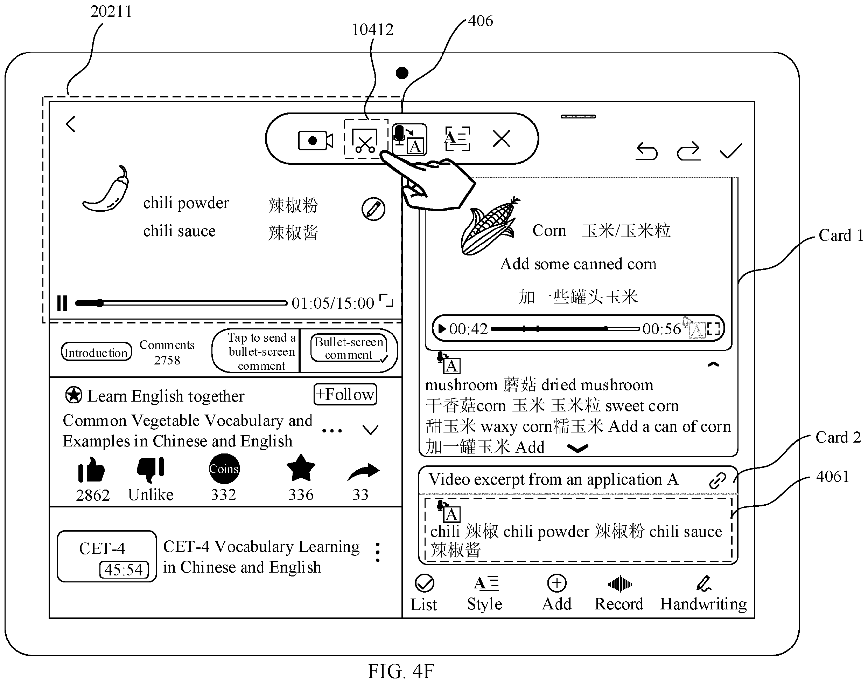

In some embodiments of this application, the fifth moment may be a moment at which the electronic device displays a user interface 406 shown in FIG. 4F, and the fifth image may be an image in a video play area 20211 shown in FIG. 4F, that is, a screenshot 40711.

It may be understood that the non-card area is an area other than the excerpted card.

With reference to the first aspect, in a possible implementation, the video processing control may include the fifth control in the fifth state. That the electronic device processes a first video in response to an operation on the video processing control may specifically include: In response to an operation on the fifth control in the fifth state, the electronic device may switch the status of the fifth control to the sixth state, collect a voice of the first video, and convert the voice into text. The automatically displaying a current processing status in the second area in a process in which the electronic device processes the first video may specifically include: automatically displaying a second card in the second area in a process of collecting the voice of the first video and converting the voice into text. Text currently obtained by the electronic device through conversion is displayed in the second card. That the electronic device generates a processing result for the first video may specifically include: In response to an operation on the fifth control in the sixth state, the electronic device may switch the status of the fifth control to the fifth state, stop collecting the voice of the first video, and generate first text. The automatically displaying the processing result in the second area may specifically include: automatically displaying the first text in the second card. The first text is text obtained by converting the voice that is of the first video and that is collected by the electronic device.

In the solution provided in this application, when no video recording is performed, the electronic device may also collect a sound signal of the first video, convert the sound signal into text, and then automatically display the text in the second card in the second area. In a process of collecting the sound signal, the electronic device may display, in real time in the second card in the second area, the text obtained through conversion.

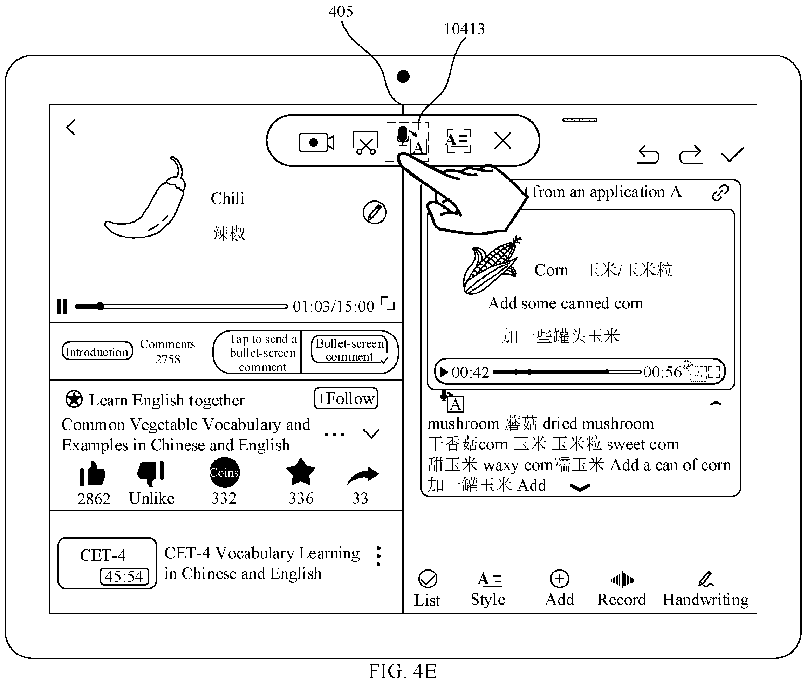

In some embodiments of this application, the fifth control in the fifth state may be the voice-to-text conversion control 10413 shown in FIG. 4E, and the fifth control in the sixth state may be the voice-to-text conversion control 10413 with a highlighted background (as shown in FIG. 4F), or may be the voice-to-text conversion control 10413 with a color changing to blue. In this case, the electronic device may display the first text in a voice-to-text conversion area 4061 in the card 1.

In some embodiments of this application, the second card may be a card 2.

With reference to the first aspect, in a possible implementation, the video processing control may include the fifth control in the fifth state. That the electronic device processes a first video in response to an operation on the video processing control may specifically include: In response to an operation on the fifth control in the fifth state, the electronic device may switch the status of the fifth control to the sixth state, collect a voice corresponding to the first video, and convert the voice into text. That the electronic device generates a processing result for the first video may specifically include: In response to an operation on the fifth control in the sixth state, the electronic device may switch the status of the fifth control to the fifth state, and generate first text. The first text may be text obtained by converting the collected voice of the first video. The automatically displaying the processing result in the second area may specifically include: automatically displaying the first text in a second card in the second area.

In the solution provided in this application, when no video recording is performed, the electronic device may also collect a sound signal (that is, voice) of the first video, convert the sound signal into text, and then automatically display the text in the second card in the second area. In the conversion process, the electronic device may first not display, in the second area, the text obtained through conversion, but automatically display, in the second card in the second area after the status of the fifth control is switched to the fifth state, the text obtained through conversion.

With reference to the first aspect, in a possible implementation, the video processing control may include the sixth control in the seventh state. That the electronic device processes a first video in response to an operation on the video processing control may specifically include: At a sixth moment at which a sixth image in the first video is displayed in the first area, in response to an operation on the sixth control in the seventh state, the electronic device may switch the status of the sixth control to the eighth state, extract text in the sixth image, and automatically display a second text area in the first area. That the electronic device generates a processing result for the first video may specifically include: The electronic device may determine to-be-inserted text in response to an operation on the second text area. The automatically displaying the processing result in the second area may specifically include: automatically displaying the to-be-inserted text in the second area. The second text area includes the text that is in the sixth image and that is extracted by the electronic device.

In the solution provided in this application, when no video recording is performed, the electronic device may also extract text in the first video, and support the user in editing the text.

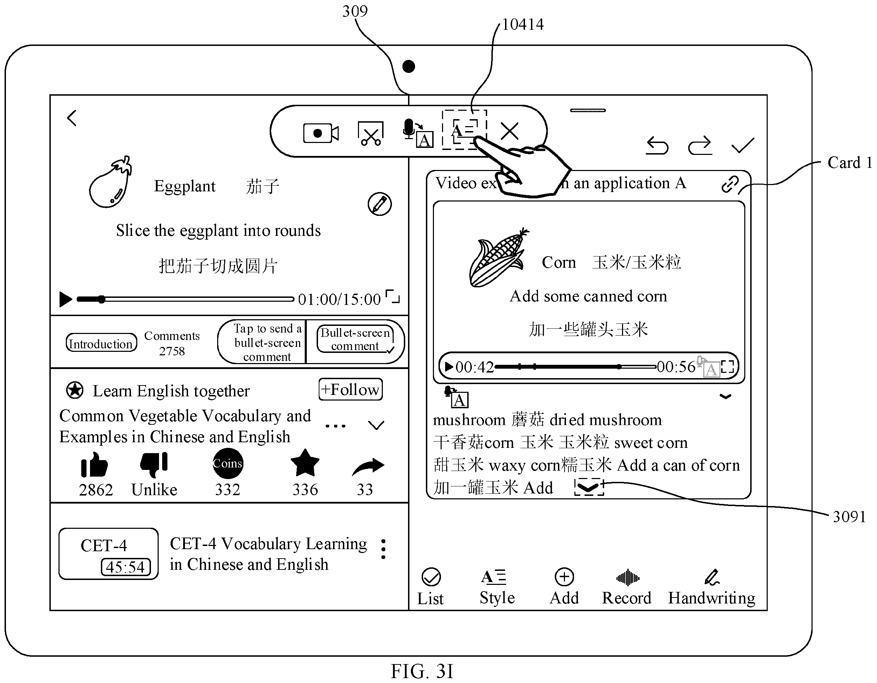

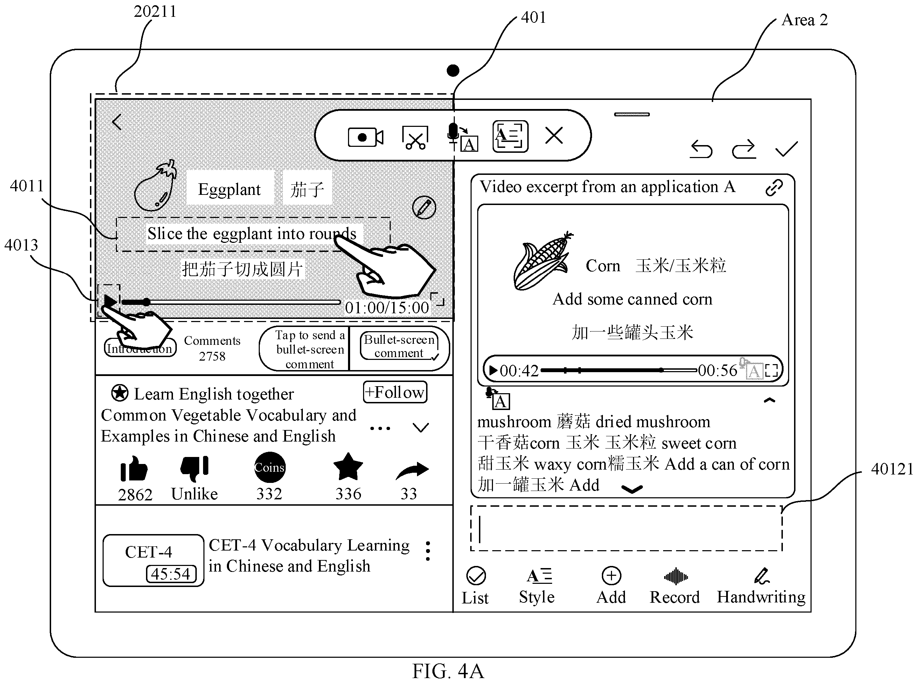

In some embodiments of this application, the sixth control in the seventh state may be the text extraction control 10414 shown in FIG. 3I, and the sixth control in the eighth state may be the text extraction control 10414 with a highlighted background (as shown in FIG. 4A-FIG. 4D), or may be the text extraction control 10414 with a color changing to blue.

In some embodiments of this application, the sixth moment may be a moment at which the electronic device displays a user interface 309 shown in FIG. 3I, the sixth image may be an image that is in the video S and that is displayed in a split-screen area in a left-half part shown in FIG. 3I, the text in the sixth image may include text 4011, and the second text area may be an area in which the text 4011 is located.

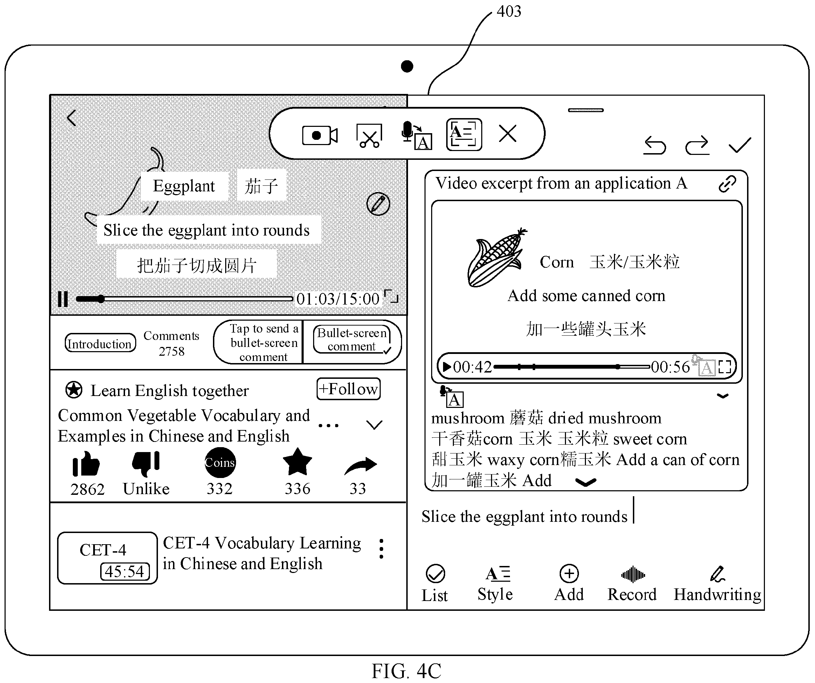

In some embodiments of this application, that the electronic device determines to-be-inserted text in response to an operation on the second text area may include: When detecting a user operation on an "Insert into note" option in a user interface 402, the electronic device may determine that the to-be-inserted text is the text 4011. Correspondingly, the electronic device may display a user interface 403 shown in FIG. 4C.

In some embodiments of this application, the electronic device may automatically display the to-be-inserted text (for example, the text 4011) in a note area 40121 in the area 2.

With reference to the first aspect, in a possible implementation, after the automatically displaying a second text area in the first area, the method may further include: At a seventh moment, when the electronic device displays the sixth control in the eighth state, a seventh image in the first video is displayed in the first area, and the second text area is displayed in the first area. The seventh moment is later than the sixth moment.

In the solution provided in this application, after the electronic device extracts the text in the first video, play of the first video is not affected.

In some embodiments of this application, the seventh moment may be a moment at which the electronic device displays the user interface 403 shown in FIG. 4C, and the seventh image may be an image that is in the video S and that is displayed in a split-screen area in a left-half part shown in FIG. 4C.

With reference to the first aspect, in a possible implementation, the video processing control may include the sixth control in the seventh state. The method may include: At an eighth moment at which an eighth image in the first video is displayed in the first area, in response to an operation on the sixth control in the seventh state, the electronic device switches the status of the sixth control to the eighth state, extracts text in the eighth image, and automatically displays a third text area in the first area; and the electronic device may display several editing options in response to an operation on the third text area. The third text area may include the text that is in the eighth image and that is extracted by the electronic device. The several editing options may be used to edit text in the third text area.

In some embodiments of this application, the eighth moment may be a moment at which the electronic device displays the user interface 403 shown in FIG. 4C, the eighth image may be an image that is in the video S and that is displayed in a split-screen area in a left-half part shown in FIG. 4C, the text in the eighth image may include text 4011, and the third text area may be an area in which the text 4011 is located.

With reference to the first aspect, in a possible implementation, the method may further include: in response to an operation on the first time label, displaying a ninth image in the second video in the first card through a jump. The ninth image is an image displayed in the first video at the first moment. The second video is a video obtained by recording the image that is in the first video and that is displayed in the first area.

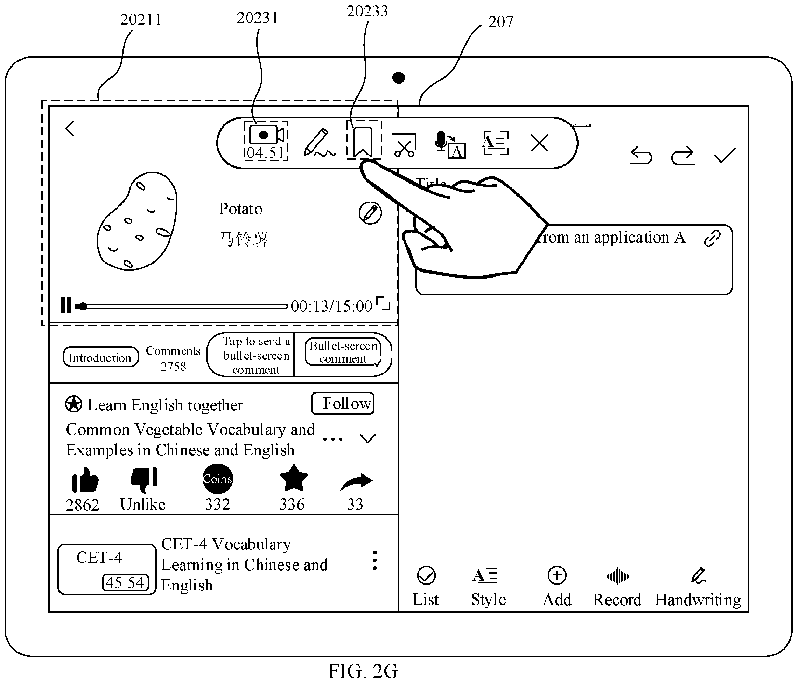

In some embodiments of this application, the ninth image may be an image in the video S in a split-screen area in a left-half part in FIG. 2G.

With reference to the first aspect, in a possible implementation, the method may further include: in response to an operation on the second time label, displaying the second image in the second video in the first card through a jump. The second image may be an image displayed in the first video at the second moment. The second video is a video obtained by recording the image that is in the first video and that is displayed in the first area.

With reference to the first aspect, in a possible implementation, that an electronic device displays a first interface may specifically include: The electronic device displays the first interface in response to an operation on a second interface. A picture in the first video in a first application is displayed in the first area and the second interface.

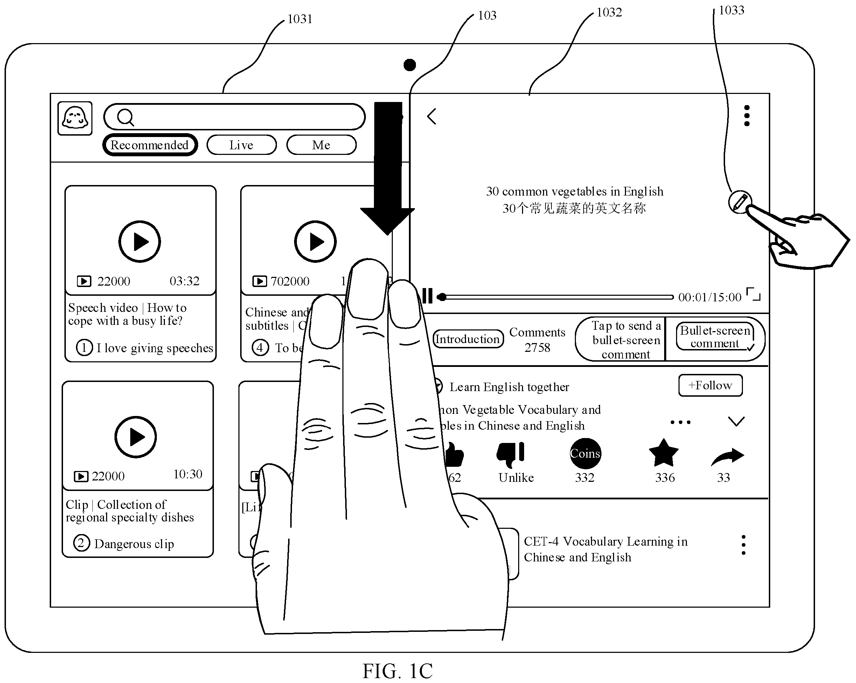

In some embodiments of this application, the second interface may be a user interface 103 shown in FIG. 1C, and the operation on the second interface may be a three-finger downward sliding operation.

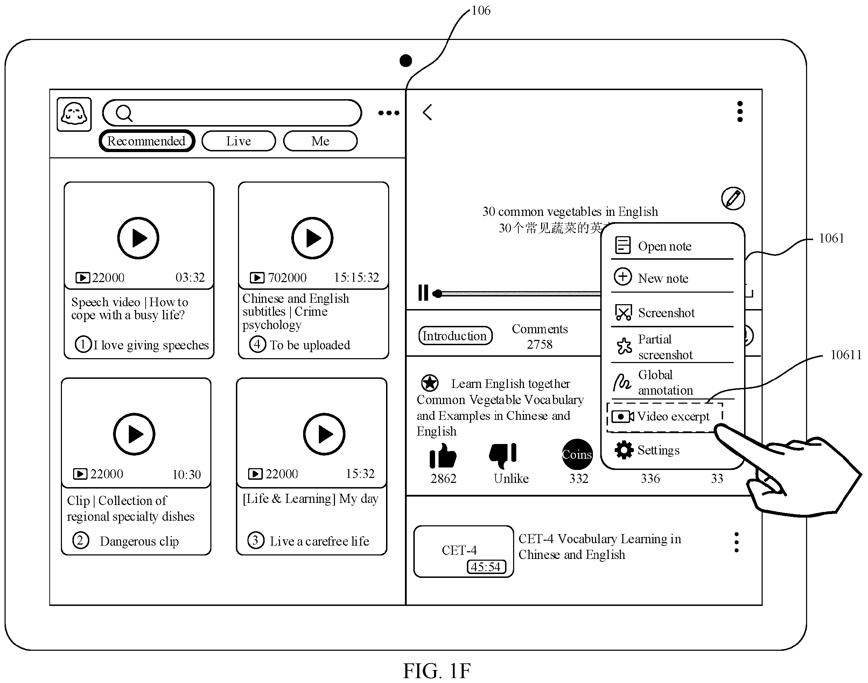

In some other embodiments of this application, the second interface may be a user interface 106 shown in FIG. 1F, and the operation on the second interface may be an operation on a "Video excerpt" option 10611.

In some embodiments of this application, the first application may be an application A.

With reference to the first aspect, in a possible implementation, before the electronic device displays the first interface, the method may include: The electronic device may display a fourth interface in response to an operation on a seventh control in a third interface. The fourth interface includes a third area and the second area. That an electronic device displays a first interface may specifically include: The electronic device may display the first interface in response to an operation on a first play entry in the third area. Content of a second application is displayed in the third interface and the second area. Content of a first application is displayed in the third area.

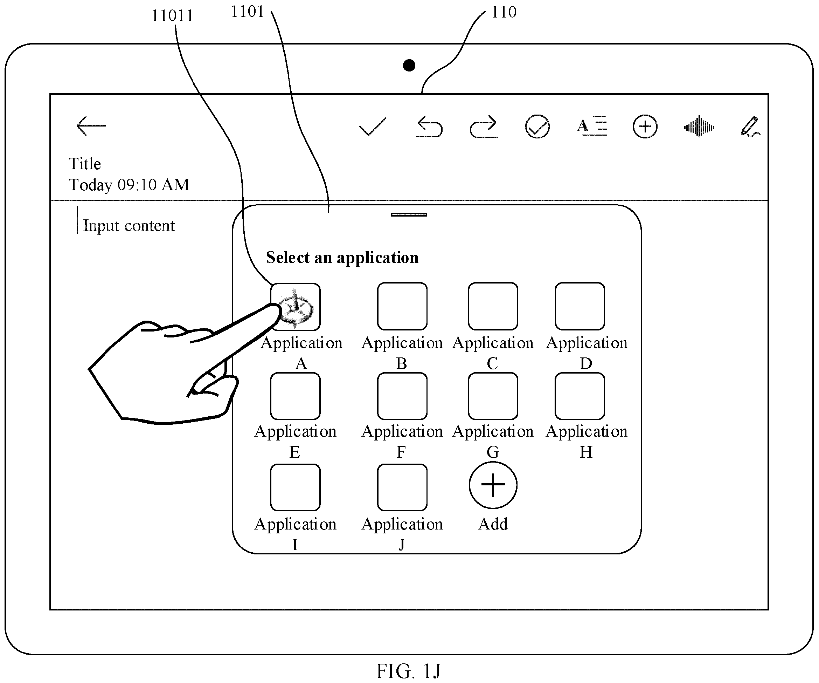

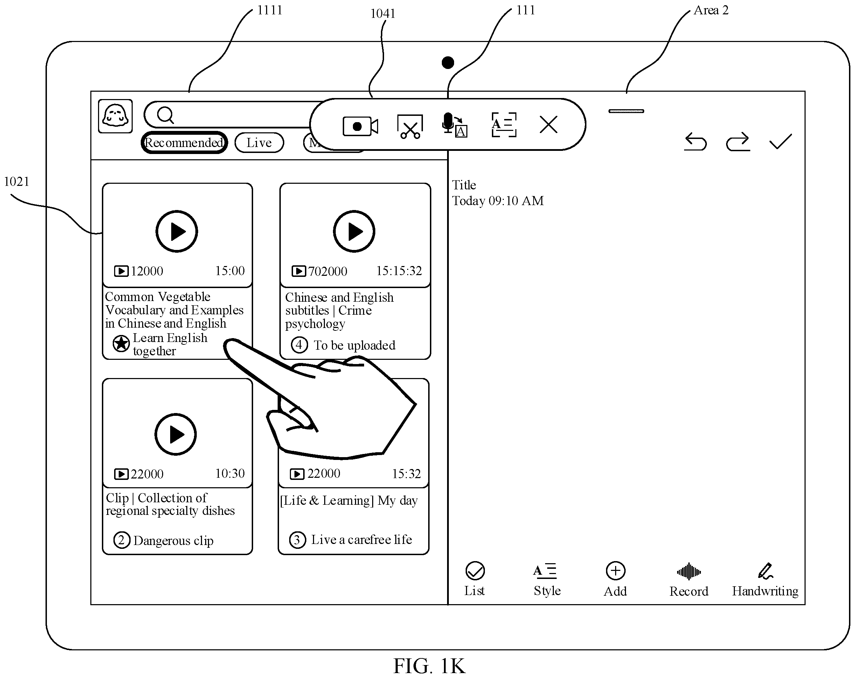

In some embodiments of this application, the third interface may be a user interface 110 shown in FIG. 1J, the fourth interface may be a user interface 111 shown in FIG. 1K, the third area may be a display area 1111, and the first play entry may be a thumbnail 1021.

In some embodiments of this application, the second application may be a note-taking application (for example, a Notepad application or a Notes application).

According to a second aspect, this application provides an information processing method. The method may include: An electronic device may display a first web page; and in response to an operation on the first web page, the electronic device extracts text on the first web page, and automatically stores the extracted text on the first web page in a second application.

In the solution provided in this application, the electronic device may quickly extract text on a web page, and automatically store the text in the second application, to improve information recording efficiency.

In some embodiments of this application, the first web page may be a web page shown in a user interface 601.

According to a third aspect, this application provides an electronic device. The electronic device includes one or more processors and one or more memories. The one or more memories are coupled to the one or more processors. The memory is configured to store computer program code. The computer program code includes computer instructions. The one or more processors invoke the computer instructions to enable the electronic device to perform the method described in any one of the first aspect or the implementations of the first aspect.

According to a fourth aspect, this application provides an electronic device. The electronic device includes one or more processors and one or more memories. The one or more memories are coupled to the one or more processors. The memory is configured to store computer program code. The computer program code includes computer instructions. The one or more processors invoke the computer instructions to enable the electronic device to perform the method described in any one of the second aspect or the implementations of the second aspect.

According to a fifth aspect, this application provides a computer storage medium, including computer instructions. When the computer instructions are run on an electronic device, the electronic device is enabled to perform the method described in any one of the first aspect or the implementations of the first aspect.

According to a sixth aspect, this application provides a computer storage medium, including computer instructions. When the computer instructions are run on an electronic device, the electronic device is enabled to perform the method described in any one of the second aspect or the implementations of the second aspect.

According to a seventh aspect, an embodiment of this application provides a chip. The chip may be applied to an electronic device. The chip includes one or more processors. The processor is configured to invoke computer instructions, to enable the electronic device to perform the method described in any one of the first aspect or the implementations of the first aspect.

According to an eighth aspect, an embodiment of this application provides a chip. The chip may be applied to an electronic device. The chip includes one or more processors. The processor is configured to invoke computer instructions, to enable the electronic device to perform the method described in any one of the second aspect or the implementations of the second aspect.

According to a ninth aspect, an embodiment of this application provides a computer program product including instructions. When the computer program product is run on an electronic device, the electronic device is enabled to perform the method described in any one of the first aspect or the implementations of the first aspect.

According to a tenth aspect, an embodiment of this application provides a computer program product including instructions. When the computer program product is run on an electronic device, the electronic device is enabled to perform the method described in any one of the second aspect or the implementations of the second aspect.

It may be understood that the electronic device provided in the third aspect, the computer storage medium provided in the fifth aspect, the chip provided in the seventh aspect, and the computer program product provided in the ninth aspect are all configured to perform the method described in any one of the first aspect or the implementations of the first aspect. Therefore, for beneficial effects that can be achieved by the electronic device, the computer storage medium, the chip, and the computer program product, refer to the beneficial effects in any possible implementation of the first aspect. Details are not described herein again. The electronic device provided in the fourth aspect, the computer storage medium provided in the sixth aspect, the chip provided in the eighth aspect, and the computer program product provided in the tenth aspect are all configured to perform the method described in any one of the second aspect or the implementations of the second aspect. Therefore, for beneficial effects that can be achieved by the electronic device, the computer storage medium, the chip, and the computer program product, refer to the beneficial effects in any possible implementation of the second aspect. Details are not described herein again.

### BRIEF DESCRIPTION OF DRAWINGS

FIG. 1A-FIG. 1L show a group of example user interfaces related to a manner of triggering a video excerpt mode;
FIG. 2A-FIG. 2S show a group of example user interfaces related to a function 1;
FIG. 3A-FIG. 3L show a group of example user interfaces related to viewing of an excerpted card;
FIG. 4A-FIG. 4G show a group of example user interfaces related to functions 2-4;
FIG. 5A-FIG. 5C show a group of example user interfaces related to viewing of a note;
FIG. 6A-FIG. 6F show a group of example user interfaces related to a function 5;
FIG. 7 is an example flowchart of an information processing method according to an embodiment of this application; and
FIG. 8 is a schematic diagram of a structure of an electronic device according to an embodiment of this application.

### DESCRIPTION OF EMBODIMENTS

The following clearly and completely describes technical solutions in embodiments of this application with reference to the accompanying drawings in the embodiments of this application. In descriptions of the embodiments of this application, unless otherwise stated, "/" indicates a meaning of "or". For example, A/B may indicate A or B. "And/Or" in the specification is merely used to describe an association relationship between associated objects, and indicates that three relationships may exist. For example, "A and/or B" may indicate that there are three cases: Only A exists, both A and B exist, and only B exists. In addition, in the descriptions of the embodiments of this application, "a plurality of" means two or more.

It should be understood that the terms "first", "second", and the like in the specification, claims, and accompanying drawings of this application are used to distinguish between different objects, and are not used to describe a specific sequence. In addition, the terms "include" and "have" and any variations thereof are intended to cover a non-exclusive inclusion. For example, a process, method, system, product, or device that includes a series of steps or units is not limited to a listed step or unit, but optionally further includes an unlisted step or unit, or optionally further includes another step or unit inherent to the process, method, product, or device.

An "embodiment" in this application means that a specific feature, structure, or characteristic described with reference to the embodiment may be included in at least one embodiment of this application. The term appearing at various locations in the specification does not necessarily refer to a same embodiment, or an independent or alternative embodiment mutually exclusive with another embodiment. A person skilled in the art explicitly and implicitly understands that the described embodiments in this application may be combined with another embodiment.

An electronic device may provide a plurality of channels for obtaining information, and may be further used as a tool for recording information. While obtaining information by using the electronic device, a user may further record the obtained information by using the electronic device.

Embodiments of this application provide an information processing method. The information processing method may be used by the electronic device to generate a note. Information in this application includes but is not limited to voice information, text information, image information, video information, and the like. Information processing in this application includes but is not limited to information recording and information viewing. Information recording includes: inputting information, processing the input information, and using a processing result as content in a note. For example, information recording may include: converting obtained voice information into text information, and editing or marking input text information or image information.

**By implementing the information processing method, the electronic device may implement one or more of the following functions, and the following functions constitute no limitation.**

**Function 1:** During information recording, the electronic device may support video recording while playing a video, and generate, in a note window (which may also be referred to as a note interface) of a note-taking application (for example, a Notepad application and a Notes application), a card that includes a recorded video. In this case, the electronic device may further support the user in entering other information in the card or a note window in which the card is located. It may be understood that the other information described herein is information other than a video, for example, text information (which may be referred to as text in the following content), voice information (which may be referred to as a voice in the following content), and image information (which may be referred to as an image in the following content).

For ease of description, in this application, the recorded video is denoted as an excerpted video, and the card generated in the note window is denoted as an excerpted card.

In the video recording process, the electronic device may support doodling on a video picture. In addition, the excerpted video may include a doodle mark. That is, after video recording ends, when the electronic device plays the excerpted video in the note window, the doodle mark may be displayed in a corresponding picture in the excerpted video.

In the video recording process, the electronic device may support capture of a video picture, that is, obtain a screenshot corresponding to the video that is being played, and insert the screenshot into the excerpted card. It may be understood that when capturing the video picture, the electronic device may further generate a corresponding time label and a corresponding input area in the excerpted card. The electronic device may support the user in entering other information in the corresponding input area.

It should be noted that in some embodiments of this application, in addition to the video picture, the screenshot obtained by the electronic device may further include content of another area. In some other embodiments of this application, regardless of whether a window for playing a video is large or small, the screenshot obtained by the electronic device is a screenshot of the video picture, and does not include content of another area displayed by the electronic device.

In the video recording process, the electronic device may add a label, and may further generate a corresponding input area in the excerpted card. The electronic device may support the user in entering other information in the corresponding input area.

In the video recording process, the electronic device may support voice-to-text conversion. In addition, text obtained through conversion may be added to the excerpted card. It may be understood that the electronic device may switch between enabling of a voice-to-text conversion function and disabling of the voice-to-text conversion function. It may be understood that the user may trigger, before video recording, the electronic device to enable the voice-to-text conversion function, or may trigger, in the video recording process, the electronic device to enable the voice-to-text conversion function.

In the video recording process, the electronic device may extract text in the video, support insertion of the text into a note, and further support an operation such as copying and selecting all on the text.

**Function 2:** During information recording, the electronic device may support extraction of text in a video while playing the video, support insertion of the text into a note, and further support an operation such as copying and selecting all on the text.

**Function 3:** During information recording, the electronic device may support voice-to-text conversion while playing a video, and generate an excerpted card in a note window of a note-taking application (for example, a Notepad application and a Notes application). The generated excerpted card includes text obtained through conversion.

**Function 4:** During information recording, regardless of whether a video is played in a large window or a small window, the electronic device may support capture of a video picture while playing the video, and insert the captured image into a note window of a note-taking application (for example, a Notepad application and a Notes application).

It may be understood that after entering a video excerpt mode, the electronic device may implement the functions 1-4.

**Function 5:** During information recording, the electronic device may support extraction of text on a web page, and store the extracted text in a note-taking application (for example, a Notepad application and a Notes application).

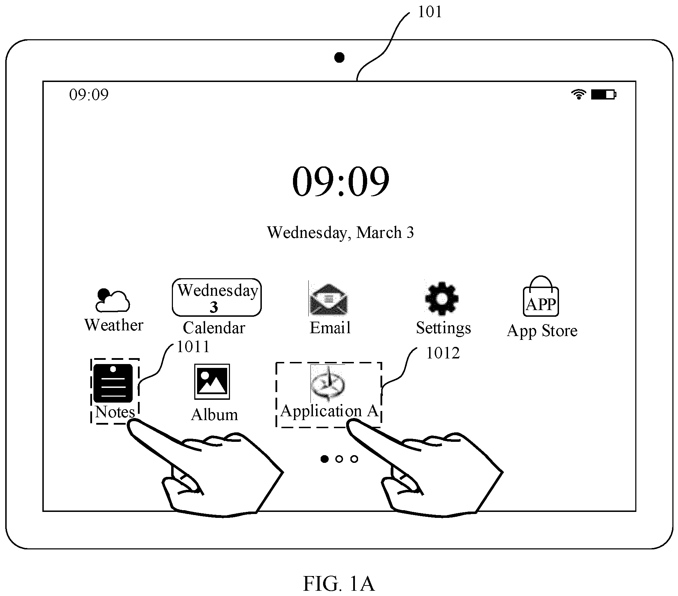

It should be noted that in a process of recording information to generate a note, the electronic device may further implement another function in addition to the functions 1-5. The electronic device may more conveniently record information based on the functions 1-5. For related content in an information recording scenario and an information viewing scenario, refer to the following descriptions of FIG. 1A-FIG. 1L, FIG. 2A-FIG. 2S, FIG. 3A-FIG. 3L, FIG. 4A-FIG. 4G, FIG. 5A-FIG. 5C, and FIG. 6A-FIG. 6F. Details are not described herein.

It may be understood that the electronic device in this application refers to a terminal device such as a mobile phone or a tablet computer. It may be understood that the electronic device may alternatively be specifically a device such as a wearable device, a vehicle-mounted device, an augmented reality (Augmented Reality, AR)/virtual reality (Virtual Reality, VR) device, a notebook computer, an ultra-mobile personal computer (Ultra-Mobile Personal Computer, UMPC), a netbook, a personal digital assistant (Personal Digital Assistant, PDA), or a dedicated camera (for example, a single-lens reflex camera or a compact camera). A specific type of the electronic device is not limited in this application.

**The following first describes a manner of triggering a video excerpt mode.**

### I. Trigger entry to the video excerpt mode during video play (as shown in FIG. 1A-FIG. 1C)

An electronic device may detect a user operation on a video application (for example, an application A). In response to the user operation, the electronic device may start the video application, and display a main interface (that is, an interface displayed by default after start) of the video application. The main interface of the video application may include thumbnails of several videos. The thumbnails of the several videos may be used to trigger the electronic device to play the several videos. The electronic device may detect a user operation on a corresponding thumbnail. In response to the user operation, the electronic device may display a play interface of a video corresponding to the corresponding thumbnail. In a possible implementation, the electronic device may detect a three-finger downward sliding operation on the play interface. In response to the operation, the electronic device may enter the video excerpt mode. In another possible implementation, the electronic device may detect an operation on a stylus shortcut control. In response to the operation, the electronic device may display an interface with a "Video excerpt" option. The "Video excerpt" option may be used to trigger the electronic device to enter the video excerpt mode.

It may be understood that the user operation in this application may include but is not limited to a touch (for example, a tap), voice control, a gesture, or the like. This is not limited in this application.

Refer to a user interface 101 shown in FIG. 1A. A page that includes an application icon is displayed in the user interface 101. The page may include a plurality of application icons (for example, a "Weather" application icon, a "Calendar" application icon, an "Email" application icon, a "Settings" application icon, an "App Store" application icon, a "Notes" application icon 1011, an "Album" application icon, and an "Application A" application icon 1012). These application icons may be used to trigger the electronic device to start corresponding applications. The "Notes" application icon 1011 is an icon of a Notes application (that is, a Notes application). The Notes application is a note-taking application. That is, a user may record text information, image information, and the like by using the Notes application. The "Application A" application icon 1012 is an icon of the application A. The application A is a video application.

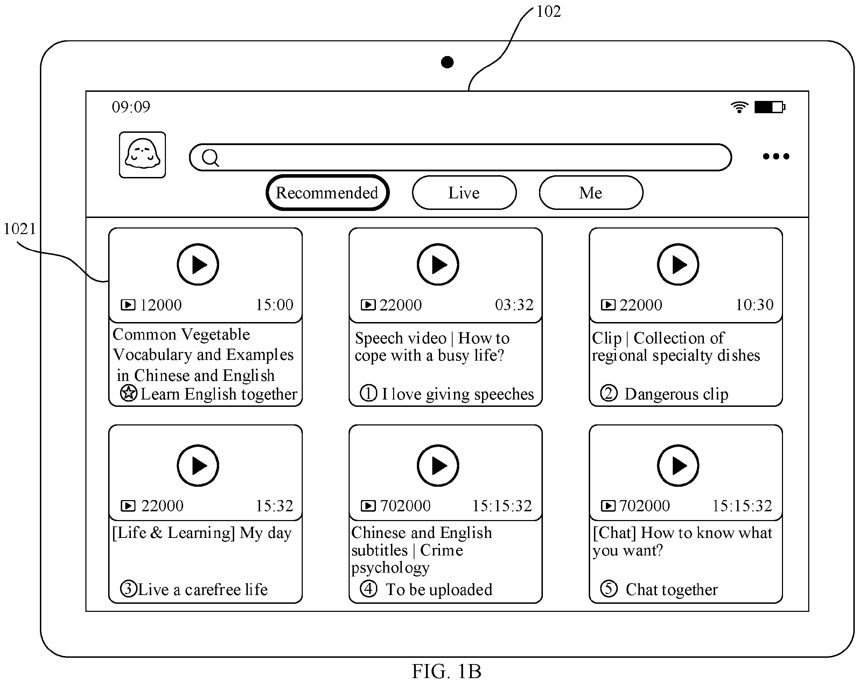

In response to a user operation on the "Application A" application icon 1012, the electronic device may start the application A, and display a user interface 102 shown in FIG. 1B. The user interface 102 is a main interface of the application A. The user interface 102 may include thumbnails (for example, a thumbnail 1021) of several videos. For ease of description, in this application, a video corresponding to the thumbnail 1021 is denoted as a video S. The electronic device may detect a user operation on the thumbnail 1021. In response to the user operation, the electronic device may play the video (that is, the video S) corresponding to the thumbnail 1021, and display a user interface 103 shown in FIG. 1C. The user interface 103 may include a display area 1031 and a display area 1032. The display area 1031 is the main interface of the application A that is displayed by the electronic device through screen splitting, and the display area 1032 is a play interface of the video S that is displayed by the electronic device through screen splitting. It may be understood that the display area 1032 may include the video S, and may further include other areas (for example, an introduction area and a video recommendation area).

### 1. Gesture-based triggering (as shown in FIG. 1C-FIG. 1E)

In some embodiments of this application, after entering the excerpt mode, the electronic device may further display a floating window in addition to the play interface of the video S. An initialization interface for a new note created in a note-taking application (for example, a Notepad application and the Notes application) is displayed in the floating window.

For example, the electronic device may detect a three-finger downward sliding operation on the user interface 103. In response to the operation, the electronic device may enter the excerpt mode, and display a user interface 104 shown in FIG. 1D. Like the user interface 103, the user interface 104 may still include the main interface of the application A and the play interface of the video S. Differently, the user interface 104 may further include a toolbar 1041 and a floating window 1042.

The toolbar 1041 may include a recording start control 10411, a screenshot control 10412, a voice-to-text conversion control 10413, a text extraction control 10414, and an exit control 10415. The recording start control 10411 may be used to enable video recording. The screenshot control 10412 is used to capture a video picture. The voice-to-text conversion control 10413 is used for voice-to-text conversion. The text extraction control 10414 is used to extract text in a video. The exit control 10415 is used to exit the video excerpt mode. A new note created by the electronic device in the note-taking application (for example, the Notepad application and the Notes application) is displayed in the floating window 1042.

It may be understood that the user may drag the floating window 1042 to change a location of the floating window 1042. The electronic device may detect a drag operation performed on the floating window 1042. In response to the operation, the electronic device may move the location of the floating window 1042.

In some embodiments of this application, after entering the excerpt mode, the electronic device may display, through screen splitting, the play interface of the video S and the new note created in the note-taking application (for example, the Notepad application and the Notes application).

For example, the electronic device may detect a three-finger downward sliding operation on the user interface 103. In response to the operation, the electronic device may enter the excerpt mode, and display a user interface 105 shown in FIG. 1E. The user interface 105 may include an area 1 and an area 2. The area 1 is the play interface of the video S, and the area 2 is an interface for a created new note (that is, an initialization interface involved after a new note is created). That is, the electronic device displays, in the area 2, the new note created by the electronic device in the note-taking application. The user interface 105 may further include the toolbar 1041.

It may be understood that the toolbar 1041 may be suspended in the area 1 and the area 2. The user may drag the toolbar 1041 to change a location of the toolbar 1041. The electronic device may detect a drag operation performed on the toolbar 1041. In response to the operation, the electronic device may move the location of the toolbar 1041.

It may be understood that the following related descriptions of other content are described by using an example based on split-screen display of the play interface of the video S and the new note created in the note-taking application (for example, the Notepad application and the Notes application). For related descriptions of the floating window, refer to the example.

### 2. Triggering based on the stylus shortcut control (as shown in FIG. 1C-FIG. 1F)

It may be understood that when the electronic device establishes a Bluetooth connection to a stylus, the electronic device may display the stylus shortcut control. The stylus shortcut control may be used to quickly trigger the electronic device to enable several functions related to the stylus.

As shown in FIG. 1C, the user interface 103 may further include a stylus floating control 1033. The electronic device may detect a user operation on the stylus floating control 1033. In response to the user operation, the electronic device may display a user interface 106 shown in FIG. 1F. The user interface 106 may include a display area 1061. The display area 1061 may include several options (for example, a "Video excerpt" option 10611, an "Open note" option, a "New note" option, a "Screenshot" option, a "Partial screenshot" option, a "Global annotation" option, and a "Settings" option). The several options are shortcut options corresponding to the several functions related to the stylus.

The electronic device may detect a user operation on the "Video excerpt" option 10611. In response to the user operation, the electronic device may display a user interface 104 shown in FIG. 1D or a user interface 105 shown in FIG. 1E.

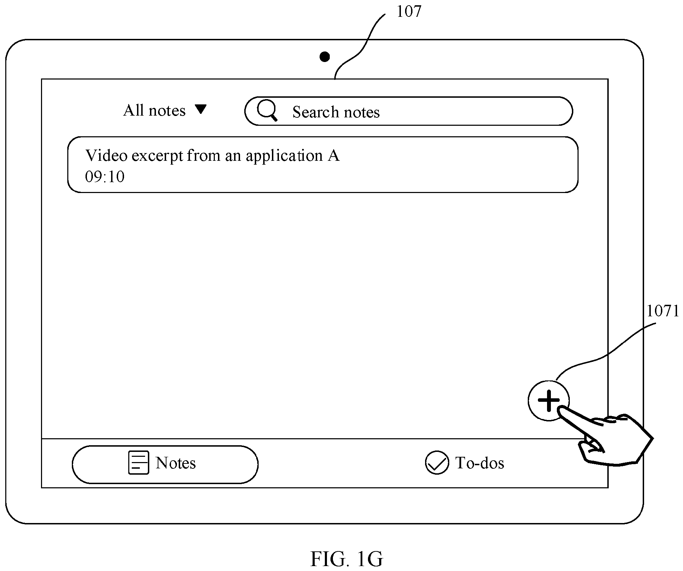

### II. Trigger entry to the video excerpt mode in a note-taking application (FIG. 1A and FIG. 1G-FIG. 1L)

An electronic device may detect a user operation on the note-taking application (for example, a Notepad application and a Notes application). In response to the user operation, the electronic device may start the note-taking application, and display a main interface of the note-taking application. The main interface of the note-taking application may include a "New" control. The electronic device may detect a user operation on the "New" control. In response to the user operation, the electronic device may create a new note, and display an initialization interface for the created new note. The electronic device may enter the video excerpt mode based on the initialization interface. In a possible implementation, the electronic device may detect a user operation on the initialization interface for the created new note. In response to the user operation, the electronic device may display an interface with a "Video excerpt" option. The "Video excerpt" option may be used to trigger the electronic device to enter the video excerpt mode. In another possible implementation, the initialization interface for the created new note may include a "Video excerpt" option.

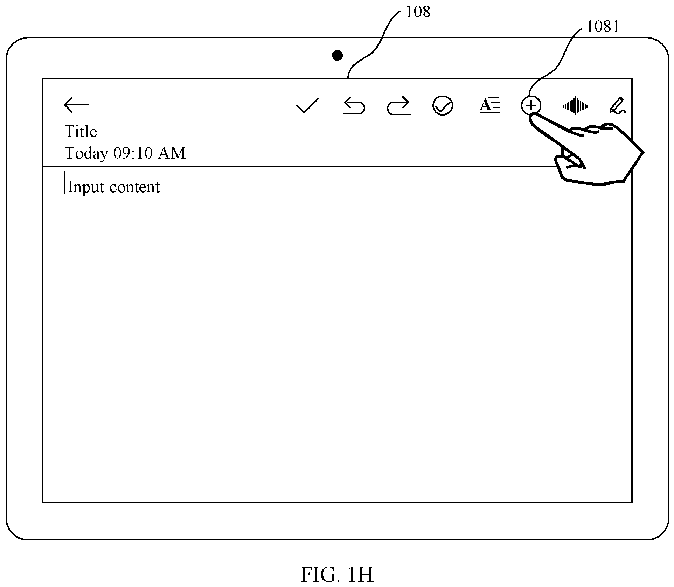

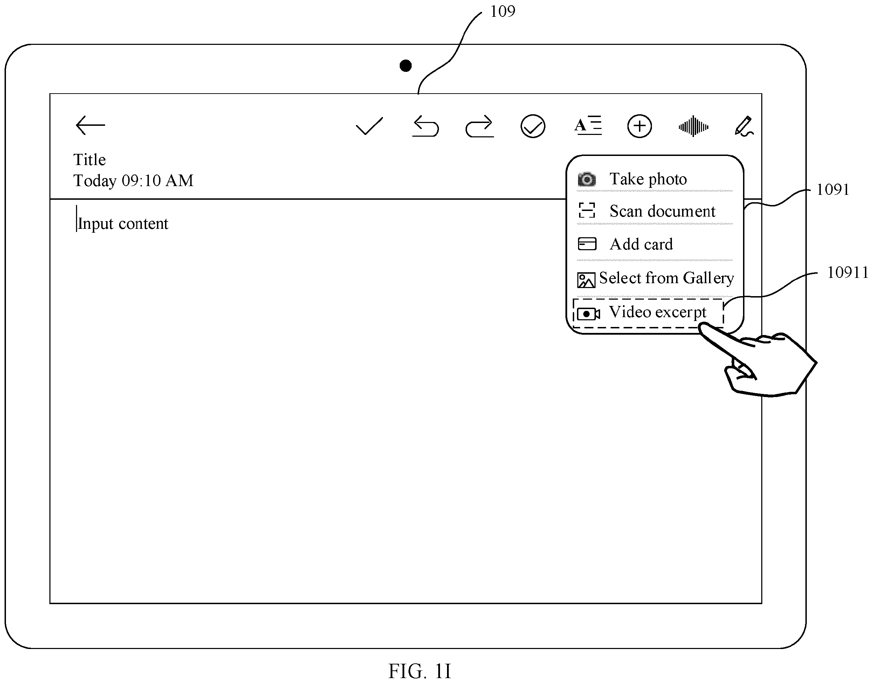

As shown in FIG. 1A, the electronic device may detect a user operation on a "Notes" application icon 1011. In response to the user operation, the electronic device may start the Notes application, and display a user interface 107 shown in FIG. 1G. The user interface 107 is a main interface of the Notes application. The user interface 107 may include a "New" control 1071. The electronic device may detect a user operation on the "New" control 1071. In response to the user operation, the electronic device may create a new note, and display a user interface 108 shown in FIG. 1H. The user interface 108 is an initialization interface involved after a new note is created. The user interface 108 may include a control 1081. The electronic device may detect a user operation on the control 1081. In response to the user operation, the electronic device may display a user interface 109 shown in FIG. 1I. The user interface 109 may include a display area 1091. The display area 1091 may include several tool options (for example, a "Video excerpt" option 10911, a "Take photo" option, a "Scan document" option, an "Add card" option, and a "Select from Gallery" option). The electronic device may detect a user operation on the "Video excerpt" option 10911. In response to the user operation, the electronic device may display a user interface 110 shown in FIG. 1J. The user interface 110 may include a display area 1101. The display area 1101 may include icons (for example, an icon 11011) of several video applications. The icon 11011 is an icon of an application A. It may be understood that the several video applications may be applications in a video application whitelist that are installed in the electronic device. The electronic device may detect a user operation on the icon 11011. In response to the user operation, the electronic device may enter the video excerpt mode, and display a user interface 111 shown in FIG. 1K. The user interface 111 may include a display area 1111, an area 2, and a toolbar 1041. The display area 1111 is a main interface of the application A. The display area 1111 may include a thumbnail 1021.

The electronic device may detect a user operation on the thumbnail 1021. In response to the user operation, the electronic device may play a video (that is, a video S) corresponding to the thumbnail 1021, and display a user interface 105 shown in FIG. 1E.

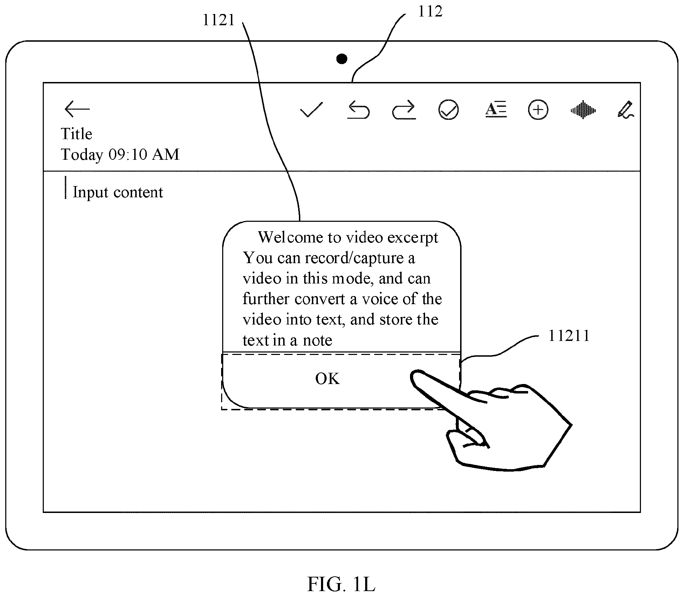

In some embodiments of this application, the electronic device may display a video excerpt function description interface. For example, the electronic device may detect a user operation on the "Video excerpt" option 10911. In response to the user operation, the electronic device may display a user interface 112 shown in FIG. 1L. The user interface 112 may include a display area 1121. The display area 1121 may include video excerpt function descriptions. The display area 1121 may include a control 11211. The electronic device may detect a user operation on the control 11211. In response to the user operation, the electronic device may display the user interface 110 shown in FIG. 1J.

It should be noted that the user may alternatively trigger, in another manner (for example, by using another gesture), the electronic device to enter the video excerpt mode. This is not limited in this application.

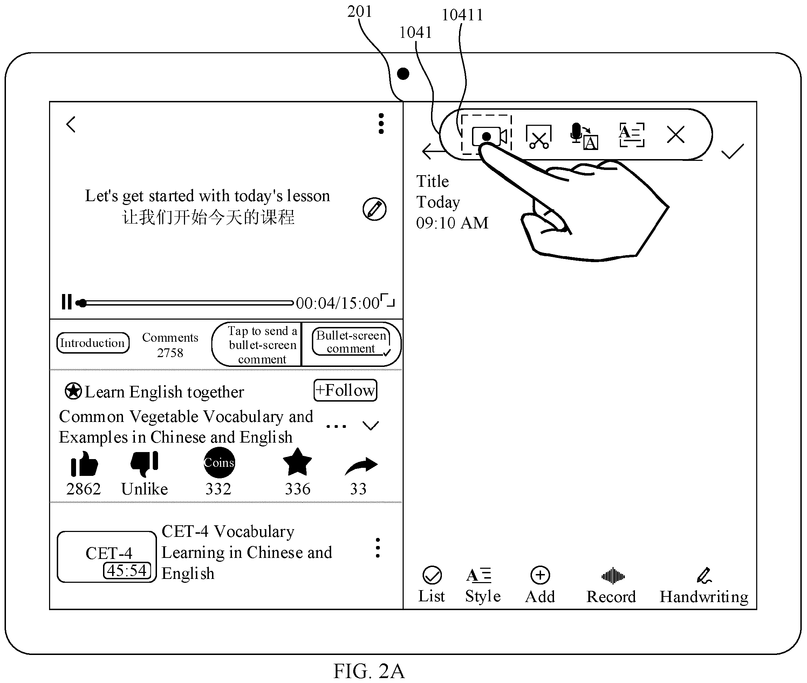

**With reference to** **FIG. 2A****-****FIG. 2S****, the following describes an implementation of the function 1 by using an example.**

An electronic device may detect a user operation on a toolbar 1041 shown in FIG. 1E. In response to the user operation, the electronic device may move the toolbar 1041, and display a user interface 201 shown in FIG. 2A. The user interface 201 includes the toolbar 1041.

### 1. Start recording (FIG. 2A)

The electronic device may detect a user operation on a recording start control 10411 included in the toolbar 1041. In response to the user operation, the electronic device may start video recording, generate an excerpted card in a note, and display a user interface 202 shown in FIG. 2B. The user interface 202 may include an area 1 and an area 2. The area 1 is a play interface of a video S. The area 1 may include a video play area 20211. In addition to the video play area 20211, the area 1 may further include other areas such as an introduction area and a video recommendation area. The area 2 is a note interface. A note displayed in the note interface may be a new note created when the electronic device enters a video excerpt mode (as shown in FIG. 1D and FIG. 1E), or may be a note originally displayed before entry to a video excerpt mode is triggered (as shown in FIG. 1I). The area 2 may include the excerpted card generated by the electronic device. For ease of description, in this application, the excerpted card is denoted as a card 1. "Recording" is displayed in the card 1, indicating that the electronic device is currently still in a video recording state. The card 1 may include a card name area 20221 and an original video link 20222. It may be understood that the card name area 20221 is an editable area. A user may change a name of a corresponding excerpted card displayed in the card name area 20221. The original video link 20222 is used to trace back to an original video (for example, the video S) corresponding to the excerpted card. When subsequently viewing the note, the electronic device may detect a user operation on the original video link 20222. In response to the user operation, the electronic device may start an application A, and display a play interface of the video S in the application A.

The user interface 202 may further include a toolbar 2023. Like the toolbar 1041, the toolbar 2023 includes a screenshot control 10412, a voice-to-text conversion control 10413, a text extraction control 10414, and an exit control 10415. Different from the toolbar 1041, the toolbar 2023 may further include a recording end control 20231, a doodle control 20232, and a label control 20233. The recording end control 20231 may be used to end video recording. The recording end control 20231 may further include a remaining maximum recording time. It may be understood that a maximum video recording time may be preset based on an actual requirement (for example, 5 minutes). This is not limited in this application. The doodle control 20232 may be used to doodle on a video picture. The label control 20233 may be used to add a time label to a recorded video.

### 2. Doodle during recording (FIG. 2B-FIG. 2F)

The electronic device may detect a user operation on the doodle control 20232 in the user interface 202. In response to the user operation, the electronic device may display a user interface 203 shown in FIG. 2C. The user interface 203 may include a color selection control 2031. The color selection control 2031 is used to display a brush color supported during doodling. The color selection control 2031 may include a control 20311, a control 20312, a control 20313, and a control 20314. The four controls are controls corresponding to four brush colors. As shown in FIG. 2C, the control 20311 is in a selected state, and a brush color corresponding to the control 20311 is a current brush color. The user may doodle on the video play area 20211 based on the brush color corresponding to the control 20311.

It may be understood that after the electronic device detects the user operation on the doodle control 20232, the doodle control 20232 may be in a selected state. In some embodiments of this application, as shown in FIG. 2C, when the doodle control 20232 is in the selected state, a background of the doodle control 20232 may be highlighted. In some other embodiments of this application, when the doodle control 20232 is in the selected state, a color of the doodle control 20232 is blue. When the doodle control 20232 is in a non-selected state, the color of the doodle control 20232 is black.

The electronic device may detect a user operation on the video play area 20211 in the user interface 203. In response to the user operation, the electronic device may display a user interface 204 shown in FIG. 2D. A doodle mark may be displayed in the video play area 20211 in the user interface 204.

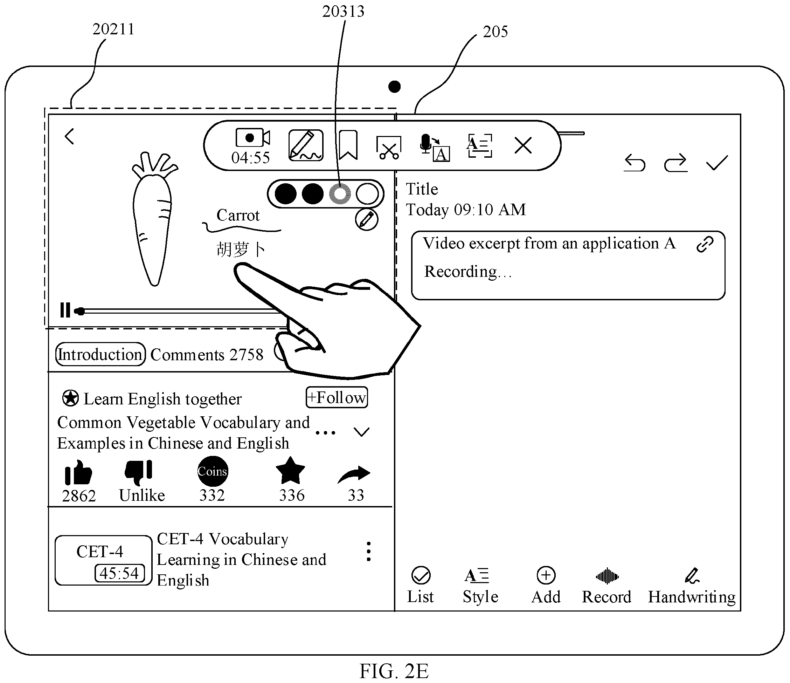

The electronic device may detect a user operation on the control 20313 in the user interface 204. In response to the user operation, the electronic device may display a user interface 205 shown in FIG. 2E. The control 20313 in the user interface 205 is in a selected state, and a brush color corresponding to the control 20313 is a current brush color. The user may doodle on the video play area 20211 based on the brush color corresponding to the control 20313.

The electronic device may detect a user operation on the video play area 20211 in the user interface 205. In response to the user operation, the electronic device may display a user interface 206 shown in FIG. 2F. A doodle mark may be displayed in the video play area 20211 in the user interface 206.

The electronic device may detect a user operation on the doodle control 20232 in the user interface 206. In response to the user operation, the doodle control 20232 may change from the selected state to the non-selected state. Correspondingly, the background of the doodle control 20232 may be not highlighted. In some embodiments of this application, when the doodle control 20232 changes from the selected state to the non-selected state, the color of the doodle control 20232 may change from blue to black.

### 3. Add a label during recording (FIG. 2G-FIG. 2J)

When the video S is played to a 13th second, the electronic device may display a user interface 207 shown in FIG. 2G. The remaining maximum recording time displayed by the recording end control 20231 in the user interface 207 is 04:51, that is, 4 minutes and 51 seconds. That is, video recording has been performed for 9 seconds. The electronic device may detect a user operation on the label control 20233 in the user interface 207. In response to the user operation, the electronic device may generate a time label in the excerpted card, and display a user interface 208 shown in FIG. 2H. The user interface 208 may include the area 2. The area 2 is a note interface. The area 2 may include the card 1. The card 1 may include a time label 20811 and a text addition area 20812. Time displayed on the time label 20811 is 00:09, indicating that the electronic device adds the time label 20811 in a 9th second during video recording. The text addition area 20812 is an editable area. The user may enter text in the text addition area 20812.

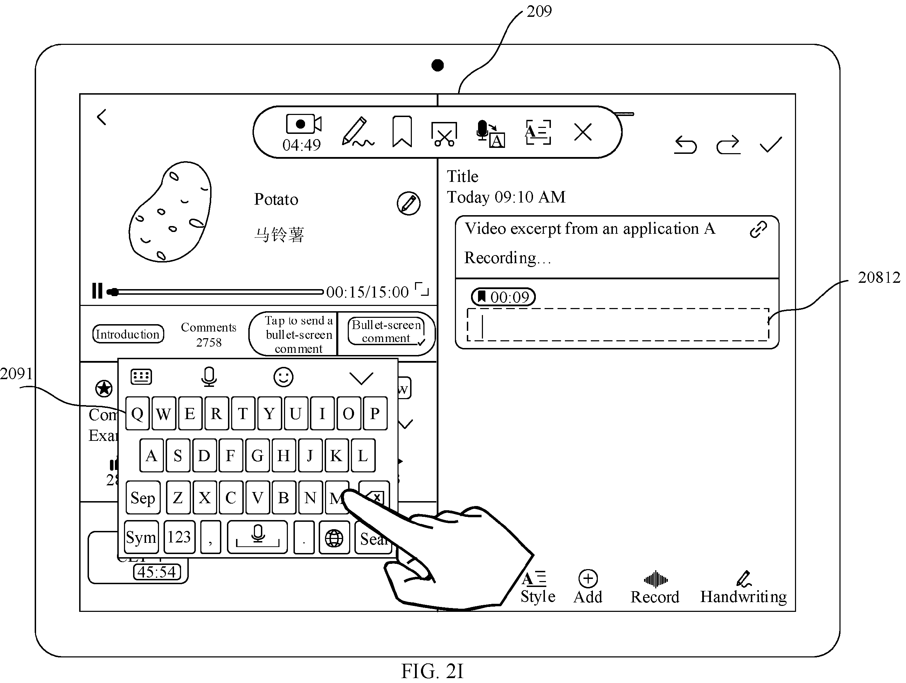

The electronic device may detect a user operation on the text addition area 20812. In response to the operation, the electronic device may display a user interface 209 shown in FIG. 2I. The user interface 209 may include a keyboard 2091. A cursor may be displayed in the text addition area 20812 in the user interface 209. The user may implement input to the text addition area 20812 based on the keyboard 2091.

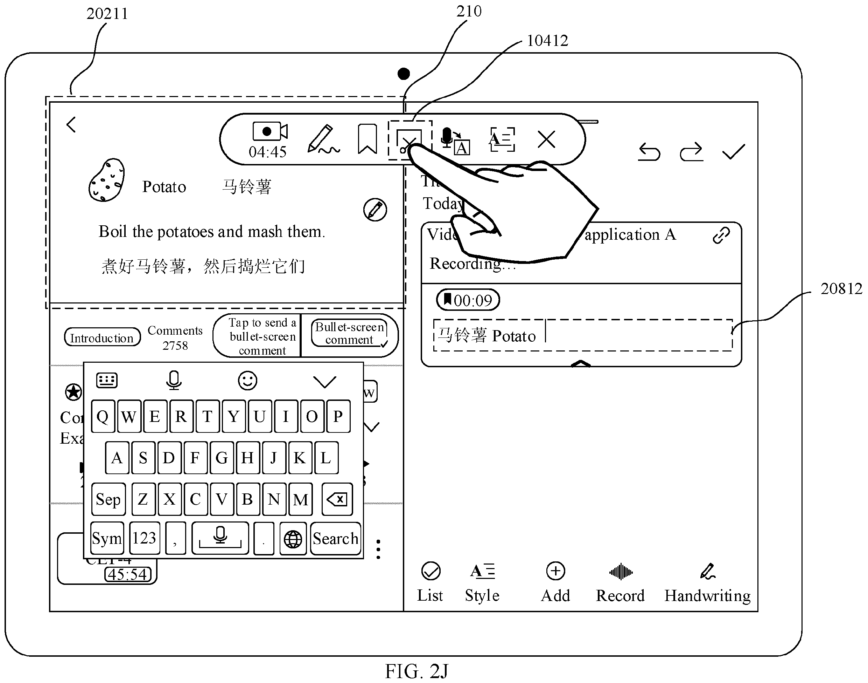

The electronic device may detect a user operation on the keyboard 2091 in the user interface 209. In response to the user operation, the electronic device may display a user interface 210 shown in FIG. 2J. " 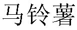 Potato" that is content entered by the user may be displayed in the text addition area 20812 in the user interface 209.

It may be understood that in the video play area 20211, a play progress bar may be displayed (as shown in FIG. 2G), or a play progress bar may not be displayed (as shown in FIG. 2J).

In some embodiments of this application, a quantity of words that can be added to the text addition area 20812 does not exceed a preset word quantity. It may be understood that the preset word quantity may be set based on an actual requirement. This is not limited in this application. For example, the preset word quantity may be 50. That is, a maximum of 50 words can be added to the text addition area 20812.

### 4. Capture a video picture during recording (FIG. 2J-FIG. 2M)

The electronic device may detect a user operation on the screenshot control 10412 in the user interface 210. In response to the user operation, the electronic device may capture a picture displayed in the video play area 20211, and display a user interface 211 shown in FIG. 2K. The user interface 211 may include the area 2. The area 2 is a note interface. The area 2 may include the card 1. The card 1 may include a time label 21111, a screenshot 21112, and a text addition area 21113. Time displayed on the time label 21111 is 00:15, indicating that the electronic device obtains the screenshot 21112 and adds the time label 21111 in a 15th second during video recording. The text addition area 21113 is an editable area. The user may enter text in the text addition area 21113.

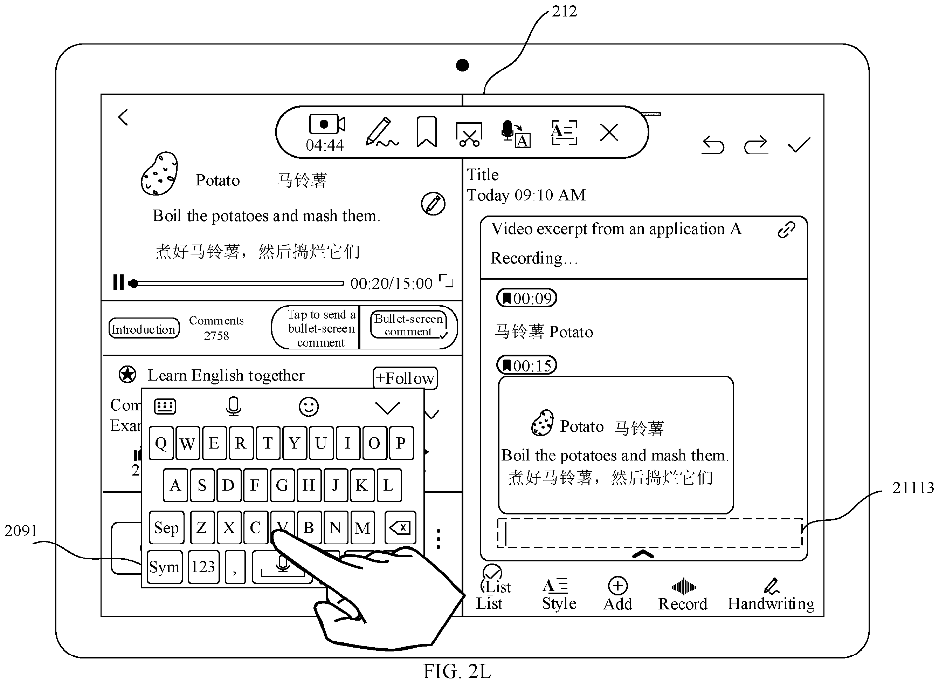

The electronic device may detect a user operation on the text addition area 21113. In response to the operation, the electronic device may display a user interface 212 shown in FIG. 2L. The user interface 212 may include the keyboard 2091. A cursor may be displayed in the text addition area 21113 in the user interface 212. The user may implement input to the text addition area 21113 based on the keyboard 2091.

The electronic device may detect a user operation on the keyboard 2091 in the user interface 212. In response to the user operation, the electronic device may display a user interface 213 shown in FIG. 2M. Content entered by the user may be displayed in the text addition area 21113 in the user interface 213.

In some embodiments of this application, similar to the text addition area 20812, a quantity of words that can be added to the text addition area 21113 does not exceed a preset word quantity, either. It may be understood that the preset word quantity may be set based on an actual requirement. This is not limited in this application.

### 5. Enable a voice-to-text conversion function during recording (FIG. 2M-FIG. 2O).

The electronic device may detect a user operation on the voice-to-text conversion control 10413 in the user interface 213. In response to the user operation, the electronic device may enable the voice-to-text conversion function, and display a user interface 214 shown in FIG. 2N. The user interface 214 may include the area 2. The area 2 is a note interface. The area 2 may include the card 1. The card 1 may include a voice-to-text conversion area 21411. It may be understood that after enabling the voice-to-text conversion function, the electronic device may collect a sound signal, convert the sound signal into text, and display the text in the voice-to-text conversion area 21411.

In some embodiments of this application, the voice-to-text conversion area 21411 in the card 1 may be located below an excerpted video.

It may be understood that after the electronic device detects the user operation on the voice-to-text conversion control 10413, the voice-to-text conversion control 10413 may be in a selected state. In some embodiments of this application, as shown in FIG. 2N, when the voice-to-text conversion control 10413 is in the selected state, a background of the voice-to-text conversion control 10413 may be highlighted. In some other embodiments of this application, when the voice-to-text conversion control 10413 is in the selected state, a color of the voice-to-text conversion control 10413 is blue. When the voice-to-text conversion control 10413 is in a non-selected state, the color of the voice-to-text conversion control 10413 is black.

The electronic device may detect a user operation on the voice-to-text conversion control 10413 in the user interface 214. In response to the user operation, the electronic device may disable the voice-to-text conversion function, and display a user interface 215 shown in FIG. 2O.

### 6. Extract text in a video picture during recording (FIG. 2O-FIG. 2R)

The electronic device may detect a user operation on the text extraction control 10414 in the user interface 215. In response to the user operation, the electronic device may extract text in a current picture displayed in the video S, and display a user interface 216 shown in FIG. 2P. The video S continues to be played in the video play area 20211 in the user interface 216. A mask is added to the video S. In general terms, a picture in the video S looks gray. The video play area 20211 may be covered with the text (for example, text 2161) extracted by the electronic device. The user may edit the text (for example, insert the text into a note, select all of the text, and copy the text).

Similarly, after the electronic device detects the user operation on the text extraction control 10414, the text extraction control 10414 may be in a selected state. In some embodiments of this application, as shown in FIG. 2P, when the text extraction control 10414 is in the selected state, a background of the text extraction control 10414 may be highlighted. In some other embodiments of this application, when the text extraction control 10414 is in the selected state, a color of the text extraction control 10414 is blue. When the text extraction control 10414 is in a non-selected state, the color of the text extraction control 10414 is black.

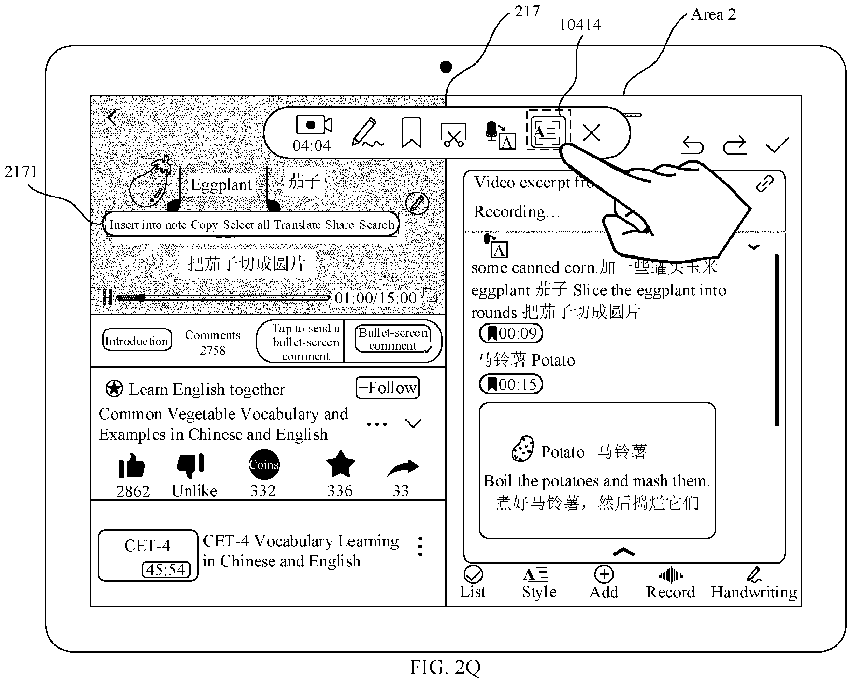

The electronic device may detect a user operation on the text 2161. In response to the user operation, the electronic device may display a user interface 217 shown in FIG. 2Q. The user interface 217 may include an editing option area 2171. The editing option area 2171 may include several editing options (for example, an "Insert into note" option, a "Copy" option, and a "Select all" option). The "Insert into note" option may be used to quickly insert selected text into a note interface (for example, a note interface shown in the area 2). It may be understood that a location for insertion into a note may be a text addition area during last editing. The text addition area during last editing may be located in a note, or may be located in the card 1.

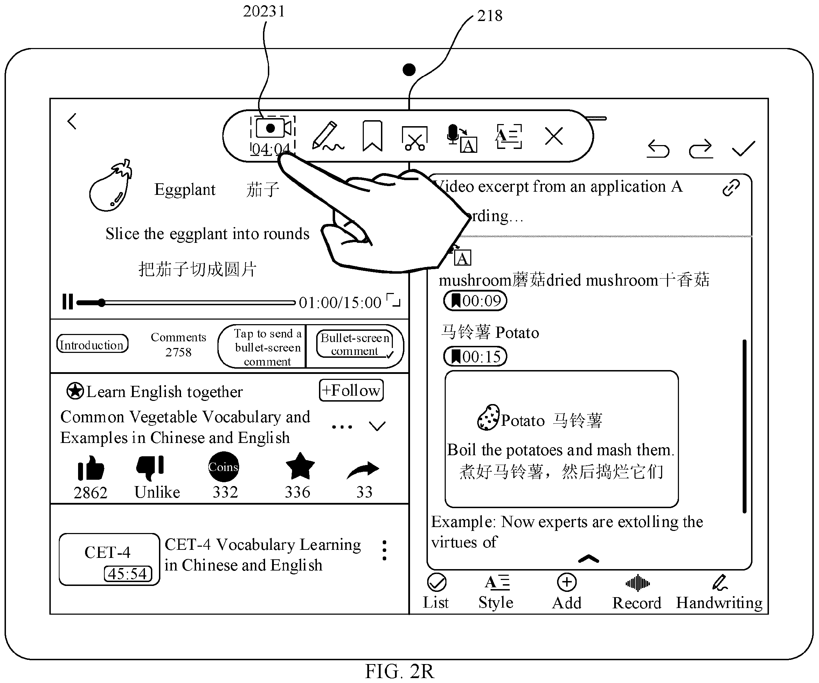

The electronic device may detect a user operation on the text extraction control 10414 in the user interface 217. In response to the user operation, the electronic device may stop displaying the extracted video text, and display a user interface 218 shown in FIG. 2R. The remaining maximum recording time displayed by the recording end control 20231 in the user interface 218 is 04:04, that is, 4 minutes and 4 seconds. That is, video recording has been performed for 56 seconds.

### 7. End video recording (FIG. 2R-FIG. 2S)

The electronic device may detect a user operation on the recording end control 20231 in the user interface 218. In response to the user operation, the electronic device may end video recording, generate an excerpted video, and display a user interface 219 shown in FIG. 2S. The user interface 219 may include a play interface of the video S and a note interface. The note interface may include the card 1. The card 1 may include a display area 2191. The excerpted video is displayed in the display area 2191. The display area 2191 may include a play toolbar 21911. The play toolbar 21911 may include a play start control 219111, a play progress bar 219112, a voice-to-text conversion control 219113, and a play enlargement control 219114. The play progress bar 219112 may include play duration and total video duration. The play progress bar 219112 may further include several time nodes (for example, a node 1 and a node 2), and the several time nodes correspond to time labels in the card 1. The node 1 corresponds to the time label 20811. The node 2 corresponds to the time label 21111.

It should be noted that as shown in FIG. 2S, when the excerpted video is in a play paused state, the voice-to-text conversion control 219113 is gray, indicating that the control cannot be triggered.

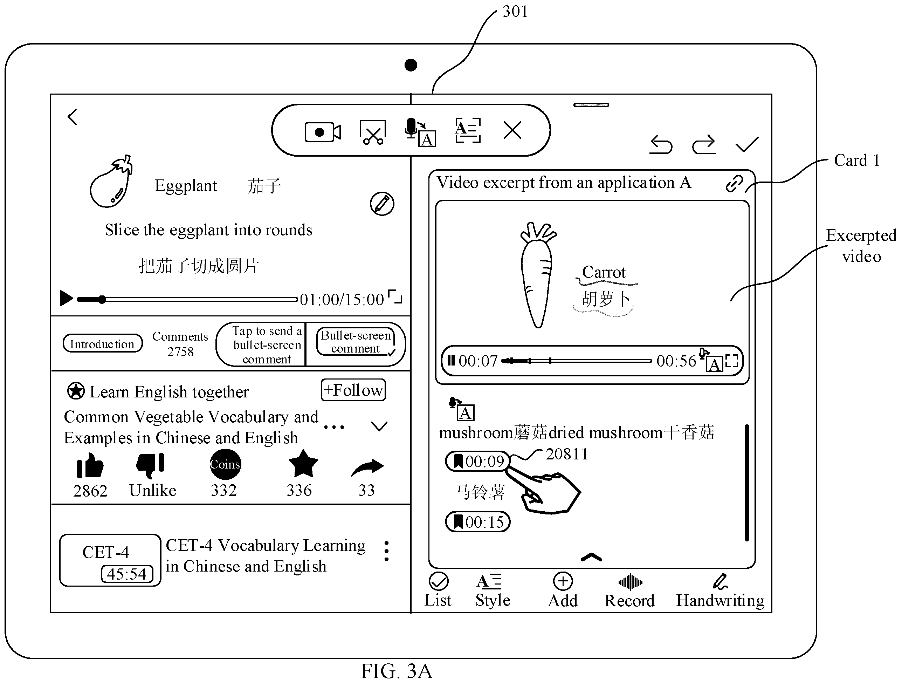

**With reference to** **FIG. 3A****-****FIG. 3L****, the following describes viewing of related content of an excerpted card by using an example.**

### 1. View a doodle mark in an excerpted video (FIG. 3A)

A video play area 20211 in the user interface 219 may further include a play pause control 2192. An electronic device may detect a user operation on the play pause control 2192. In response to the user operation, the electronic device may pause play of a video S. The electronic device may further detect a user operation on a play start control 219111. In response to the user operation, the electronic device may start to play the excerpted video. When the excerpted video is played to a 7th second, the electronic device may display a user interface 301 shown in FIG. 3A. The excerpted video in the user interface 301 is currently in a playing state. In this case, a picture displayed in the excerpted video includes the doodle mark.

### 2. Play the excerpted video through a jump based on a time label (FIG. 3A-FIG. 3C)

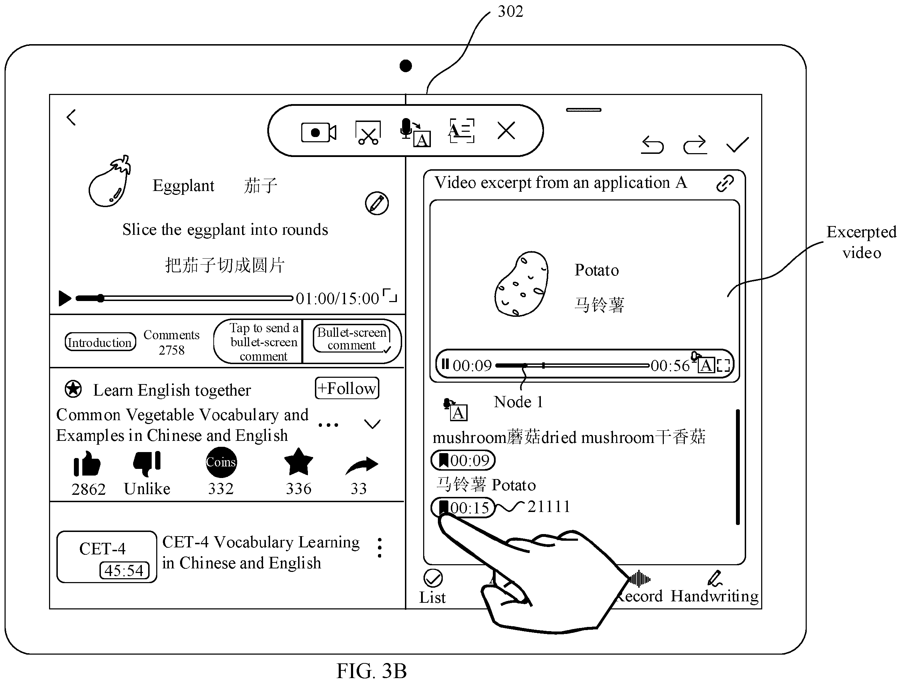

The electronic device may detect a user operation on a time label 20811 in the user interface 301. In response to the user operation, the electronic device may play, through a jump, the excerpted video to a time node corresponding to the time label 20811, and display a user interface 302 shown in FIG. 3B. The excerpted video in the user interface 302 is played to a node 1 through a jump.

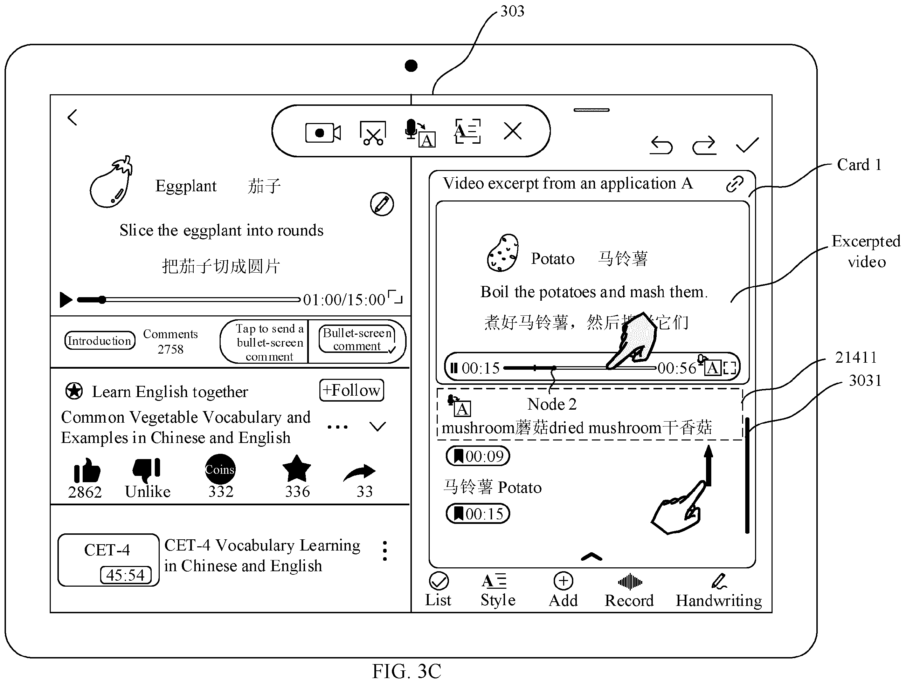

The electronic device may detect a user operation on a time label 21111 in the user interface 301. In response to the user operation, the electronic device may play, through a jump, the excerpted video to a time node corresponding to the time label 21111, and display a user interface 303 shown in FIG. 3C. The excerpted video in the user interface 303 is played to a node 2 through a jump.

### 3. Slide to view an excerpted card (FIG. 3C-FIG. 3D)

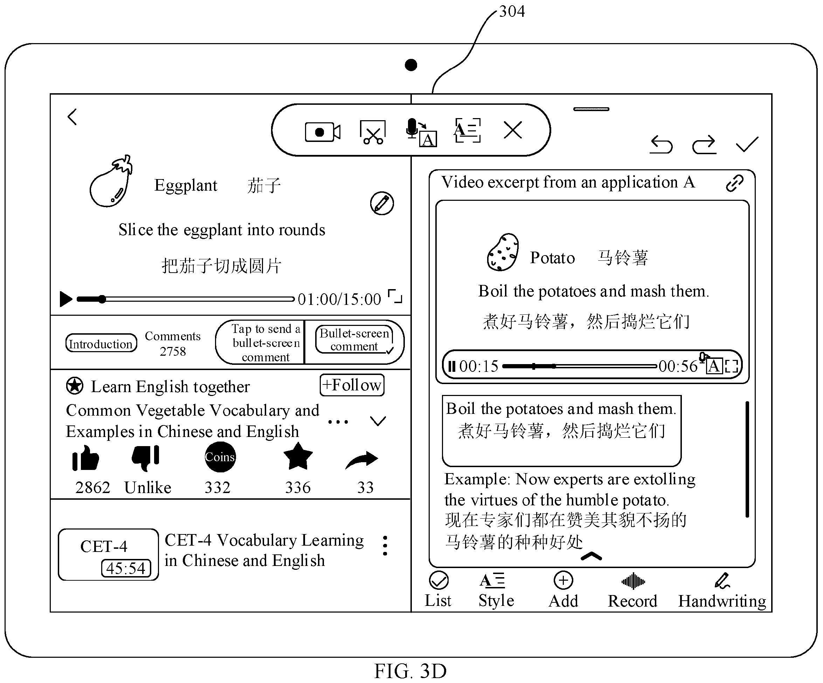

The electronic device may detect an upward sliding operation on a non-video area in a card 1 in the user interface 303. In response to the operation, the electronic device may display a user interface 304 shown in FIG. 3D. Content displayed in the non-video area in the card 1 in the user interface 304 is different from content displayed in the non-video area in the card 1 in the user interface 303.

In some embodiments of this application, the electronic device may detect a downward sliding operation on a scroll bar 3031 in the user interface 303. In response to the operation, the electronic device may display the user interface 304 shown in FIG. 3D.

In some embodiments of this application, in response to the upward sliding operation on the non-video area in the card 1 in the user interface 303, the electronic device may still display the excerpted video and a voice-to-text conversion area 21411 in the card 1, but a displayed video note area in the card 1 is different. That is, as the upward sliding operation is performed, the video note area displayed by the electronic device slides upward, but the excerpted video and the voice-to-text conversion area 21411 in the card 1 do not slide upward.

It may be understood that the video note area in the excerpted card is an area other than the excerpted video and the voice-to-text conversion area in the excerpted card.

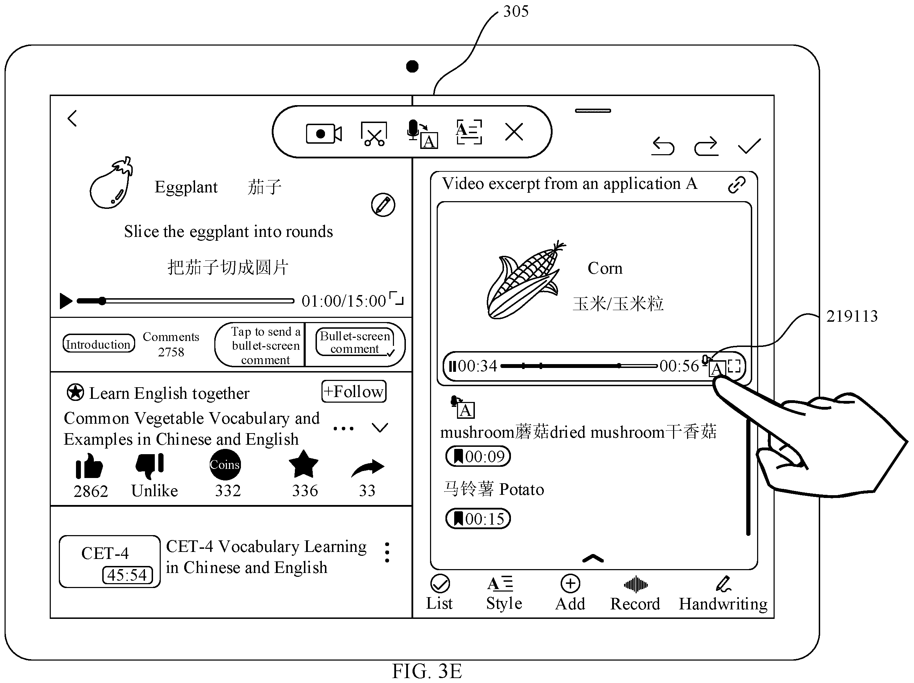

### 4. Enable a voice-to-text conversion function when the excerpted video is played (FIG. 3E-FIG. 3G).

When the excerpted video is played to a 34th second, the electronic device may display a user interface 305 shown in FIG. 3E. It may be understood that as shown in FIG. 3E, when the excerpted video is being played, a voice-to-text conversion control 219113 may be triggered.

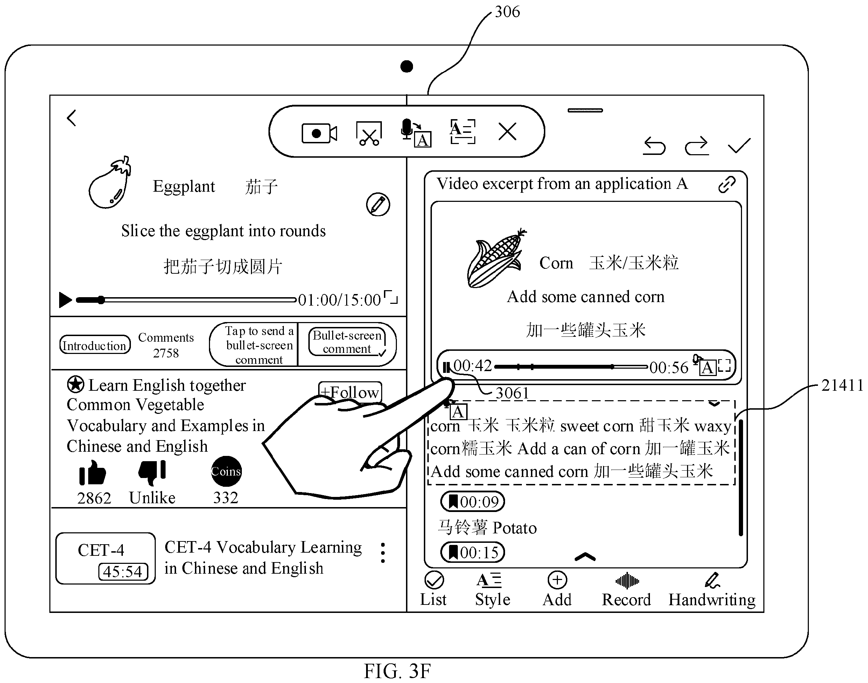

The electronic device may detect a user operation on the voice-to-text conversion control 219113 in the user interface 305. In response to the user operation, the electronic device may enable the voice-to-text conversion function, and display a user interface 306 shown in FIG. 3F. Text obtained by converting a sound signal collected by the electronic device may be displayed in the voice-to-text conversion area 21411 in the user interface 306.

In some embodiments of this application, a maximum of h lines of text may be displayed in the voice-to-text conversion area 21411. Herein, h is a positive integer. It may be understood that a specific value of h may be set based on an actual requirement. This is not limited in this application. For example, h may be 3. For another example, h may alternatively be 2.

In some embodiments of this application, when the electronic device enables the voice-to-text conversion function, if there are more than h lines of text in the voice-to-text conversion area 21411, the electronic device may display h lines of text recently obtained through conversion, and collapse other lines of text.

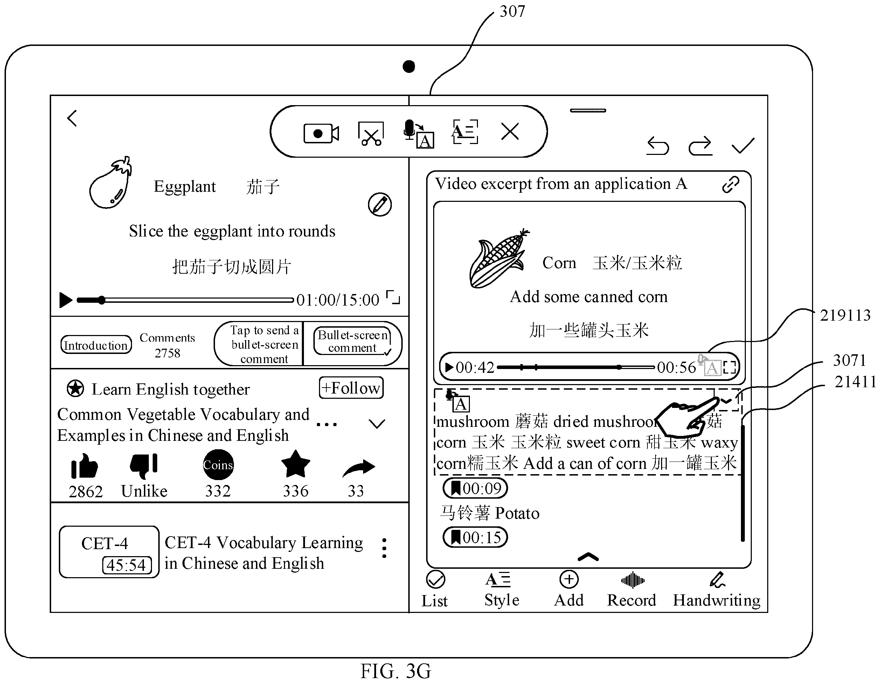

The electronic device may detect a user operation on a play pause control 3061 in the user interface 306. In response to the operation, the electronic device may pause play of the excerpted video, disable the voice-to-text conversion function, and display a user interface 307 shown in FIG. 3G. The voice-to-text conversion control 219113 in the user interface 307 is gray, indicating that the control cannot be triggered. The user interface 307 may include a text expansion control 3071. The text expansion control 3071 is used to expand the text in the voice-to-text conversion area 21411.

### 5. Collapse and expansion of the voice-to-text conversion area and the excerpted card (FIG. 3G-FIG. 31)

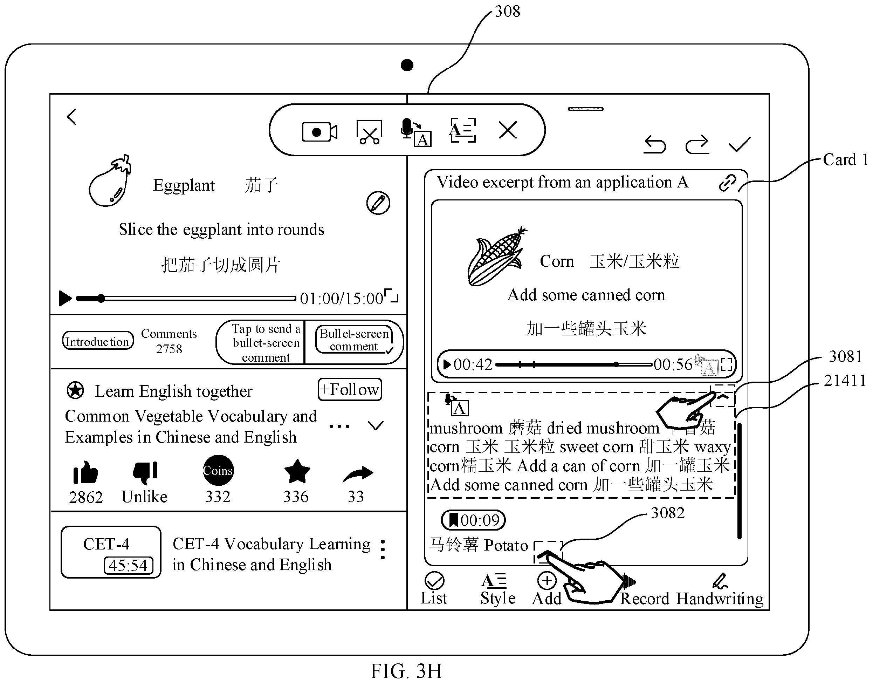

The electronic device may detect a user operation on the text expansion control 3071. In response to the user operation, the electronic device may display a user interface 308 shown in FIG. 3H. Four lines of text are displayed in the voice-to-text conversion area 21411 in the user interface 308. These four lines of text are text obtained by converting all sound signals previously collected by the electronic device. The user interface 308 may include a text collapse control 3081. The text collapse control 3081 may be used to collapse the text in the voice-to-text conversion area 21411. The user interface 308 may further include a card collapse control 3082. The card collapse control 3082 may be used to collapse the card 1.

It may be understood that the electronic device may detect a user operation on the text collapse control 3081. In response to the user operation, the electronic device may display a user interface 307 shown in FIG. 3G.

The electronic device may detect a user operation on the card collapse control 3082. In response to the user operation, the electronic device may display a user interface 309 shown in FIG. 3I. The card 1 in the user interface 309 is in a collapsed state. The user interface 309 may include a card expansion control 3091. The card expansion control 3091 may be used to expand the card 1.

It may be understood that the electronic device may detect a user operation on the card expansion control 3091. In response to the user operation, the electronic device may display a user interface 308 shown in FIG. 3H.

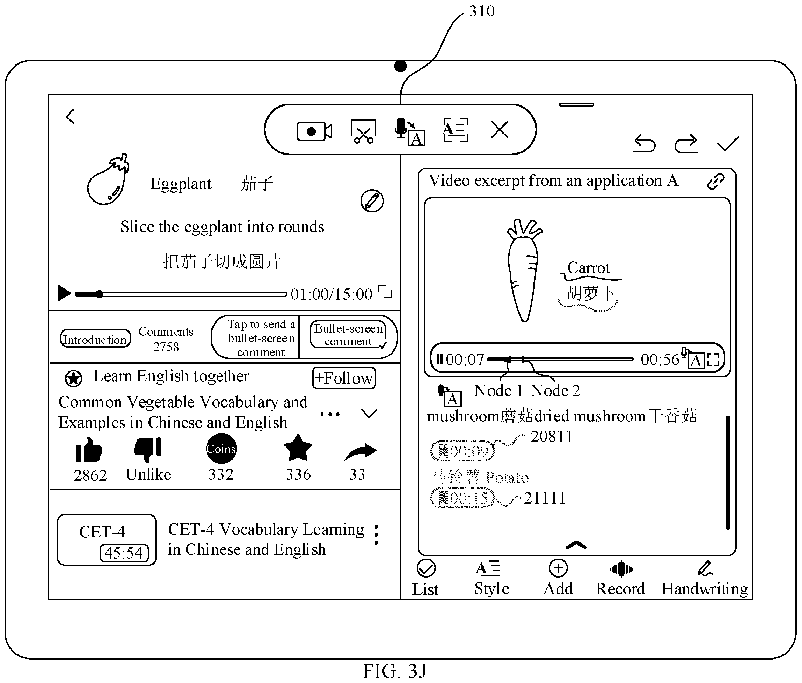

### 6. Display status of the video note area in the excerpted card when the excerpted video is played (FIG. 3J-FIG. 3L)

In some embodiments of this application, when the excerpted video is played, the non-video area (that is, the voice-to-text conversion area and the video note area) may be displayed through sliding. In addition, a time label corresponding to a time node to which play has proceeded in the excerpted video, a corresponding screenshot, and a corresponding text addition area may be normally displayed, and a time label corresponding to a time node to which play has not proceeded in the excerpted video, a corresponding screenshot, and a corresponding text addition area may be covered with a mask. In some embodiments of this application, in a process of playing the excerpted video, a time label corresponding to a latest play time node in the non-video area may be highlighted. For example, the time label may change from original black to blue.

When the excerpted video is played to the 7th second, the electronic device may display a user interface 310 shown in FIG. 3J. In this case, the excerpted video is not played to the node 1 and the node 2. Therefore, time labels (that is, the time label 20811 and the time label 21111) corresponding to the node 1 and the node 2 in the user interface 310 and text addition areas corresponding to the time label 20811 and the time label 21111 are all covered with a mask.

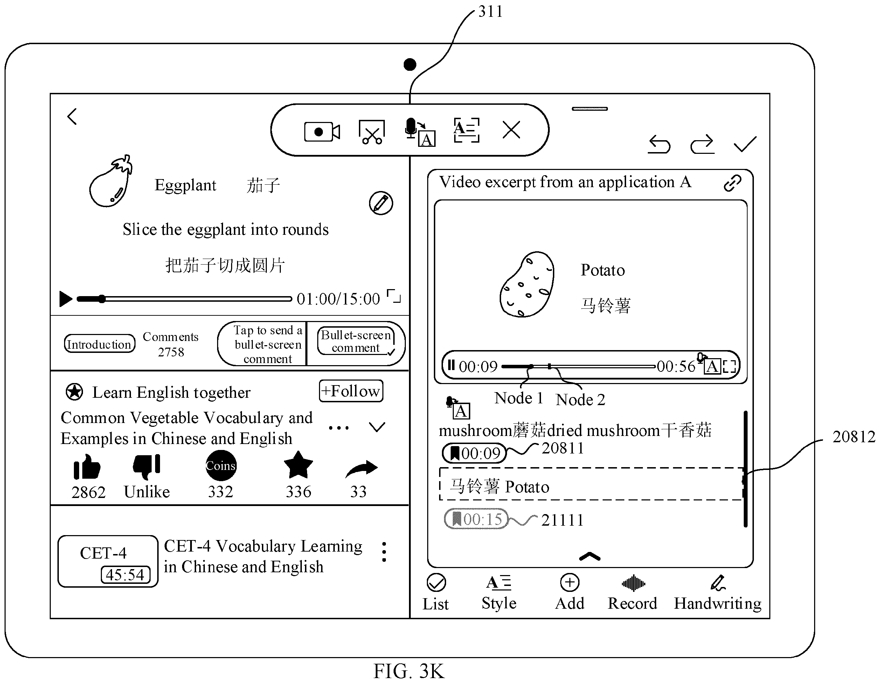

When the excerpted video is played to a 9th second, the electronic device may display a user interface 311 shown in FIG. 3K. In this case, the excerpted video is played to the node 1 but not to the node 2. Therefore, the time label (that is, the time label 20811) corresponding to the node 1 in the user interface 311 and the text addition area (that is, a text addition area 20812) corresponding to the time label 20811 are normally displayed, and the time label (that is, the time label 21111) corresponding to the node 2 in the user interface 311 is covered with a mask.

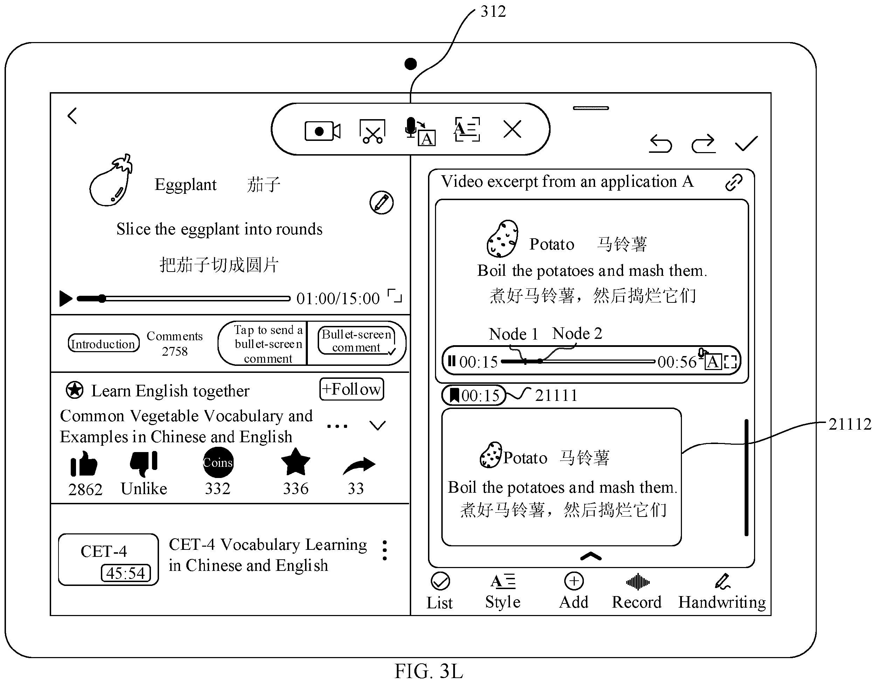

When the excerpted video is played to a 15th second, the electronic device may display a user interface 312 shown in FIG. 3L. In this case, the excerpted video is played to the node 2. Therefore, the electronic device displays, through sliding, the time label (that is, the time label 21111) corresponding to the node 2, and the screenshot (that is, a screenshot 21112) corresponding to the time label 21111.

In some embodiments of this application, the electronic device may highlight a time label corresponding to a most recent play node.

In some other embodiments of this application, when the excerpted video is played, the voice-to-text conversion area is not displayed through sliding, and the video note area may be displayed through sliding. For a specific implementation of this part of content, refer to the foregoing descriptions. Details are not described herein again.

**With reference to** **FIG. 4A****-****FIG. 4G****, the following describes an implementation of the functions 2-4 by using an example.**

It may be understood that a text extraction method when the electronic device enters a video excerpt mode but does not record a video is similar to a text extraction method when the electronic device enters the video excerpt mode and records a video; a voice-to-text conversion method when the electronic device enters the video excerpt mode but does not record a video is similar to a voice-to-text conversion method when the electronic device enters the video excerpt mode and records a video; and a method for capturing a video picture when the electronic device enters the video excerpt mode but does not record a video is similar to a method for capturing a video picture when the electronic device enters the video excerpt mode and records a video.

The electronic device may detect a user operation on a text extraction control 10414 in a user interface 309. In response to the user operation, the electronic device may extract text in a current picture displayed in a video S, and display a user interface 401 shown in FIG. 4A. A mask is added to and the text (for example, text 4011) extracted by the electronic device further covers a video play area 20211 in the user interface 401. A user may edit (for example, select, select all of, and copy) the text. The user interface 401 may include an area 2. The area 2 may include a note area 40121. It may be understood that the note area 40121 is a text addition area during last editing by the user. A cursor is displayed in the note area 40121.

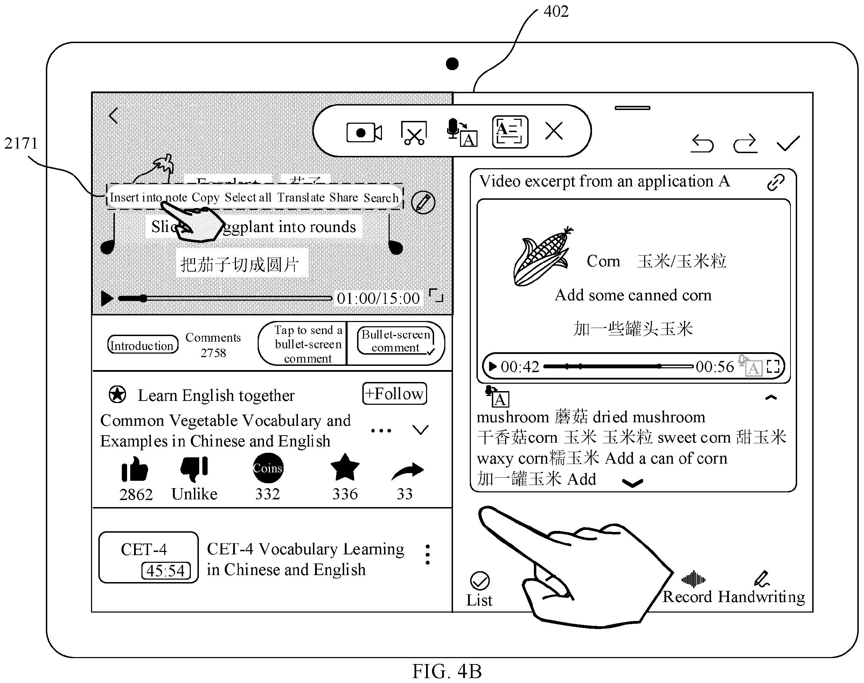

The electronic device may detect a user operation on the text 4011. In response to the user operation, the electronic device may select the text 4011, and display a user interface 402 shown in FIG. 4B. The user interface 402 may include an editing option area 2171. The editing option area 2171 may include an "Insert into note" option.

The electronic device may detect a user operation on the "Insert into note" option in the user interface 402. In response to the operation, the electronic device may display a user interface 403 shown in FIG. 4C.

Certainly, the user may alternatively perform other forms of editing (for example, selecting, selecting all, and copying) on the selected text (for example, the text 4011). This is not limited in this application.

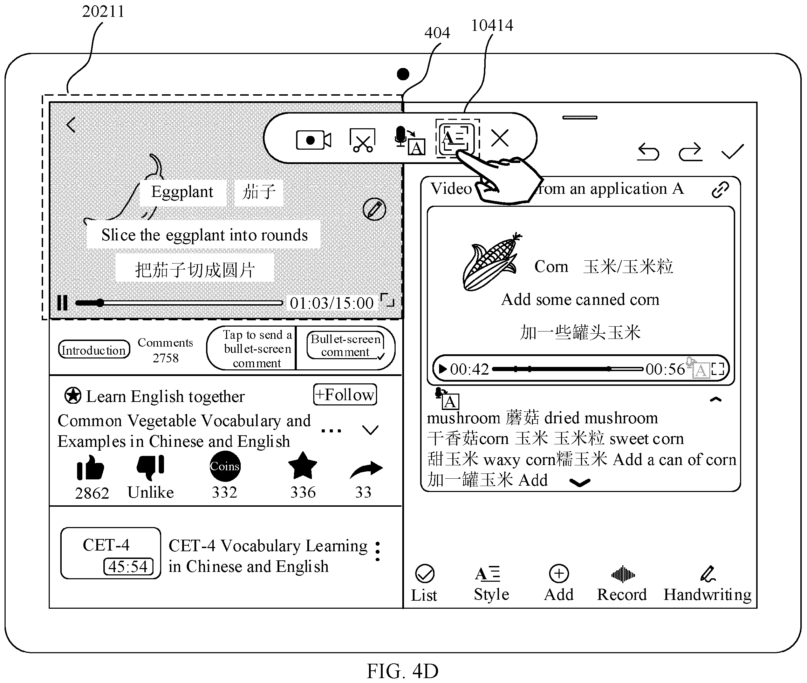

It may be understood that the user interface 401 may further include a play start control 4013. The electronic device may detect a user operation on the play start control 4013. In response to the user operation, the electronic device may start to play the video S, and display a user interface 404 shown in FIG. 4D. A picture that is in the video S and that is displayed in the video play area 20211 in the user interface 404 is different from a picture that is in the video S and that is displayed in the video play area 20211 in the user interface 401. However, when the video S is played to a 1st minute, the electronic device detects a user operation on the text extraction control 10414. Therefore, text that is extracted by the electronic device and that covers the video play area 20211 in the user interface 401 and text that is extracted by the electronic device and that covers the video play area 20211 in the user interface 404 are the same, and both are text in a picture displayed when the video S is played to the 1st minute.

The electronic device may detect a user operation on the text extraction control 10414 in the user interface 404. In response to the user operation, the electronic device may stop displaying the extracted video text, and display a user interface 405 shown in FIG. 4E.

The electronic device may detect a user operation on a voice-to-text conversion control 10413 in the user interface 405. In response to the user operation, the electronic device may enable a voice-to-text conversion function, generate a new excerpted card in a note, and display a user interface 406 shown in FIG. 4F. For ease of description, in this application, the new excerpted card is denoted as a card 2. The card 2 may include a voice-to-text conversion area 4061. It may be understood that after enabling the voice-to-text conversion function, the electronic device may collect a sound signal, convert the sound signal into text, and display the text in the voice-to-text conversion area 4061.

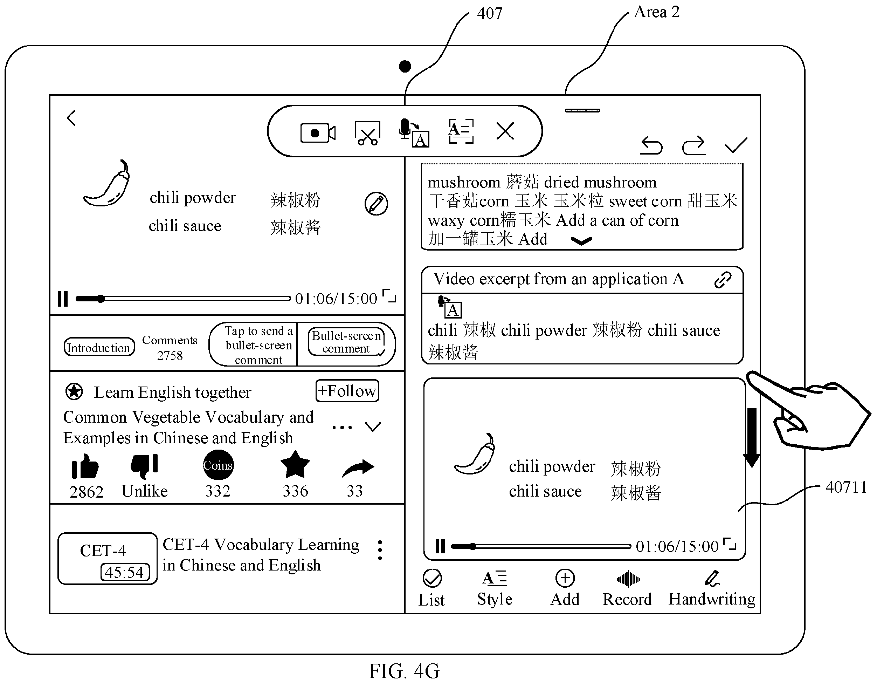

The electronic device may detect a user operation on a screenshot control 10412 in the user interface 406. In response to the user operation, the electronic device may capture a picture displayed in the video play area 20211, and display a user interface 407 shown in FIG. 4G. The user interface 407 may include a play interface of the video S and the area 2. The area 2 may include a screenshot 40711. It may be understood that the screenshot 40711 is located in a note instead of an excerpted card. That is, the screenshot 40711 is located in a non-card area in the area 2.

It may be understood that the electronic device may detect a downward sliding operation on the area 2. In response to the operation, the electronic device may view other content (for example, an excerpted video, text, and a screenshot) of a note corresponding to the area 2.

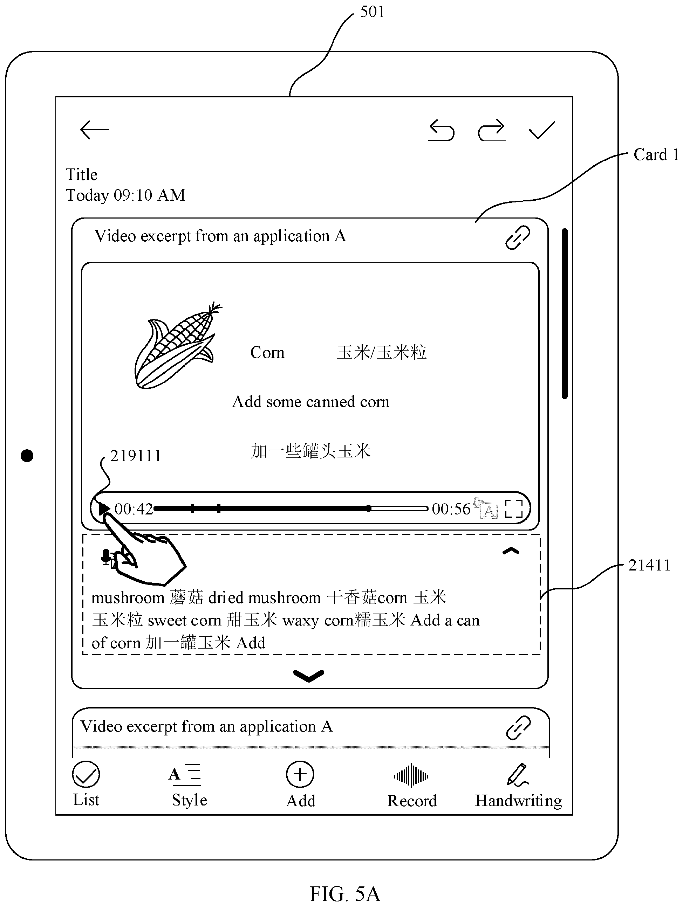

**With reference to** **FIG. 5A****-****FIG. 5C****, the following describes viewing of related content of a note by using an example.**

A user may view, in a note-taking application (for example, a Notepad application and a Notes application), a note stored after an electronic device enters a video excerpt mode.

In some embodiments of this application, an excerpted video in a note interface is being played. In this case, the electronic device may detect an upward sliding operation on the note interface, and in response to the operation, the electronic device may play the excerpted video in a small window.

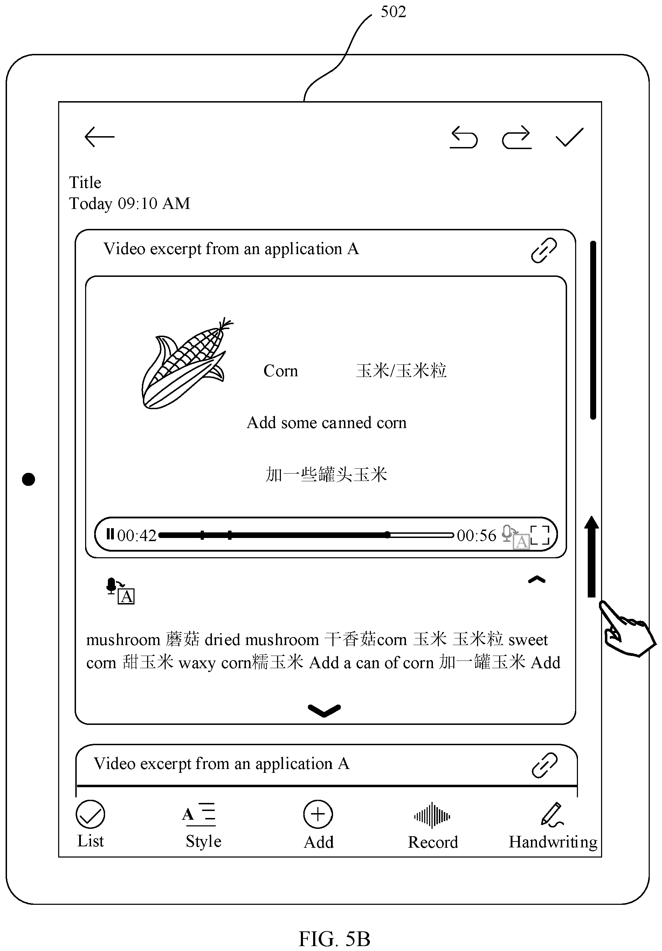

The electronic device may display a user interface 501 shown in FIG. 5A. The electronic device may detect a user operation on a play start control 219111 in the user interface 501. In response to the user operation, the electronic device may start to play the excerpted video in a card 1, and display a user interface 502 shown in FIG. 5B.

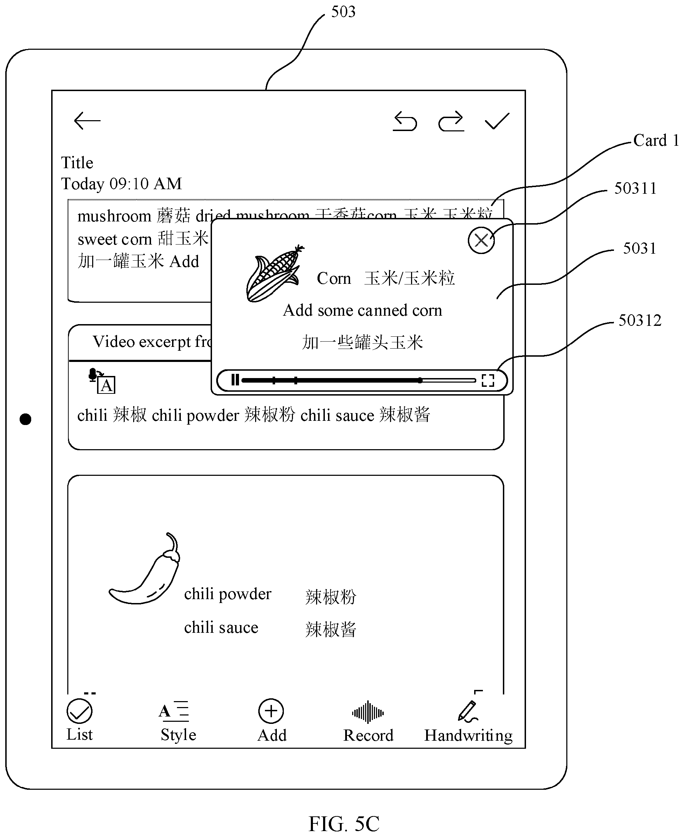

The electronic device may detect an upward sliding operation on the user interface 502. In response to the user operation, the electronic device may display a user interface 503 shown in FIG. 5C. The user interface 503 may include a video window 5031. The video window 5031 is a play window of the excerpted video in the card 1. The video window 5031 may include an exit control 50311 and a play toolbar 50312. The exit control 50311 may be used to exit the video window 5031. The play toolbar 50312 may include a play pause control, a play progress bar, and a play enlargement control. The play pause control is used to pause play of the excerpted video. The play progress bar is used to view play progress of the excerpted video. The play enlargement control is used to play the excerpted video through enlargement.

In some embodiments of this application, when the electronic device displays an excerpted card (for example, the card 1 in the user interface 501) in a note, the excerpted card may be collapsed to f% of a screen height. It may be understood that a range of f is (0, 100), and a specific value off may be set based on an actual requirement. This is not limited in this application. For example, f may be 60.

In some embodiments of this application, when the electronic device displays an excerpted card (for example, the card 1 in the user interface 501) in a note, a maximum height obtained after expansion of the excerpted card does not exceed a first preset height. When the maximum height obtained after expansion of the excerpted card reaches the first preset height, and a part of content is still not displayed, content in the excerpted card may be displayed through sliding. It may be understood that the first preset height may be set based on an actual requirement. This is not limited in this application. For example, the first preset height may be a screen height of the electronic device.

In some embodiments of this application, when the electronic device displays an excerpted video (for example, the excerpted video in the card 1) in a note, a height of the excerpted video may fall within a first preset range. It may be understood that the first preset range may be set based on an actual requirement. This is not limited in this application. For example, a minimum value of the first preset range is 1/5 of a screen height (that is, a screen height of the electronic device), a maximum value of the first preset range is 1/3 of the screen height, and the first preset range may include the minimum value and the maximum value.

In some embodiments of this application, when the electronic device displays a voice-to-text conversion area (for example, a voice-to-text conversion area 21411 in the card 1 shown in FIG. 5A) in a note, a maximum height obtained after expansion of the voice-to-text conversion area does not exceed a second preset height. When the maximum height obtained after expansion of the voice-to-text conversion area reaches the second preset height, and a part of content is still not displayed, content in the voice-to-text conversion area may be displayed through sliding. It may be understood that the second preset height may be set based on an actual requirement. This is not limited in this application. For example, the second preset height may be 1/3 of a screen height.

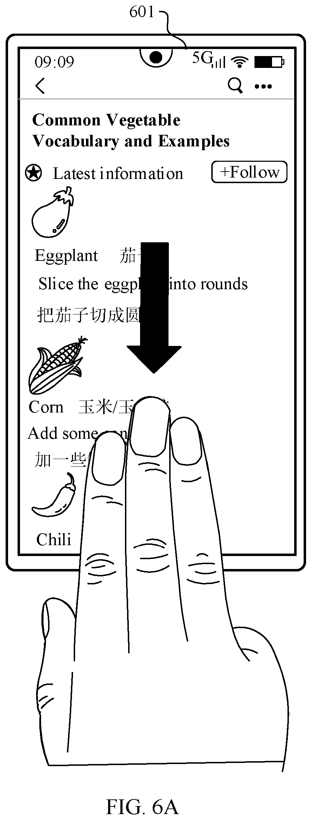

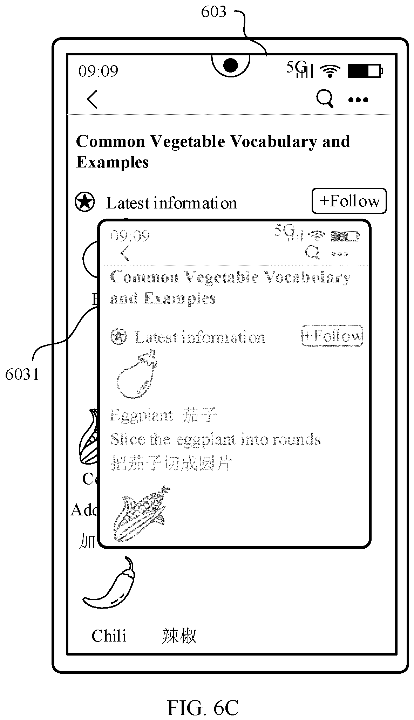

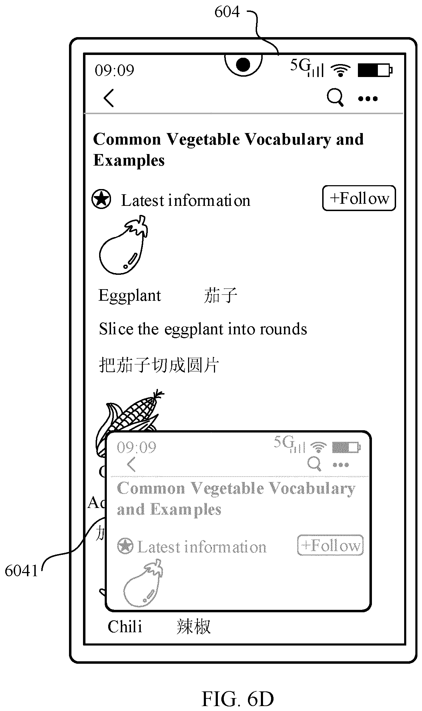

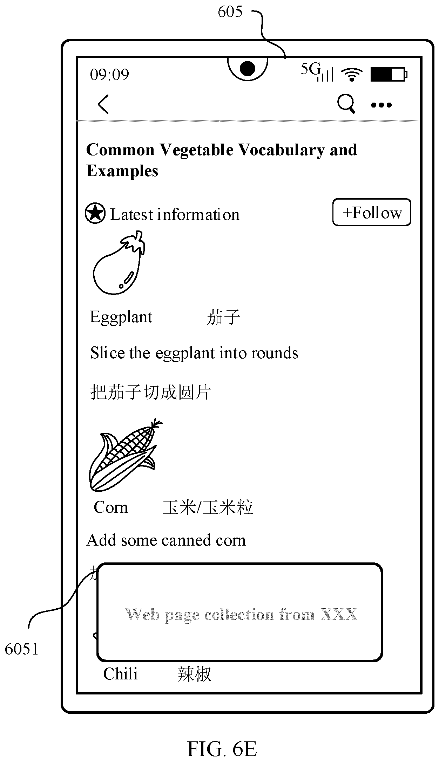

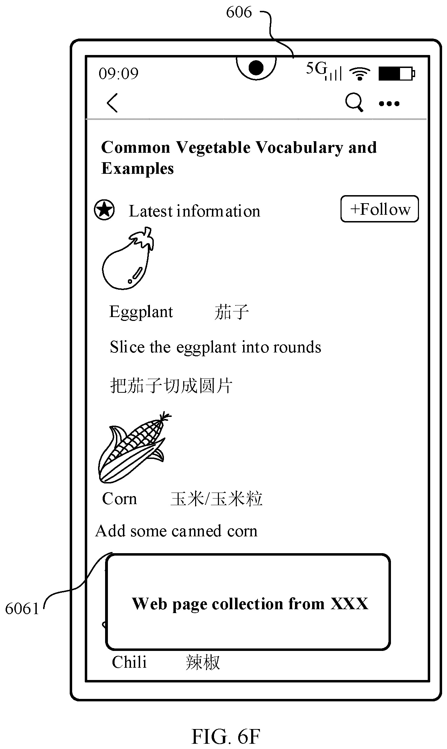

**With reference to** **FIG. 6A****-****FIG. 6F****, the following describes an implementation of the function 5 by using an example.**

An electronic device may detect a user operation on a web page. In response to the user operation, the electronic device may extract text on the web page, and store the extracted text in a note-taking application (for example, a Notepad application and a Notes application).

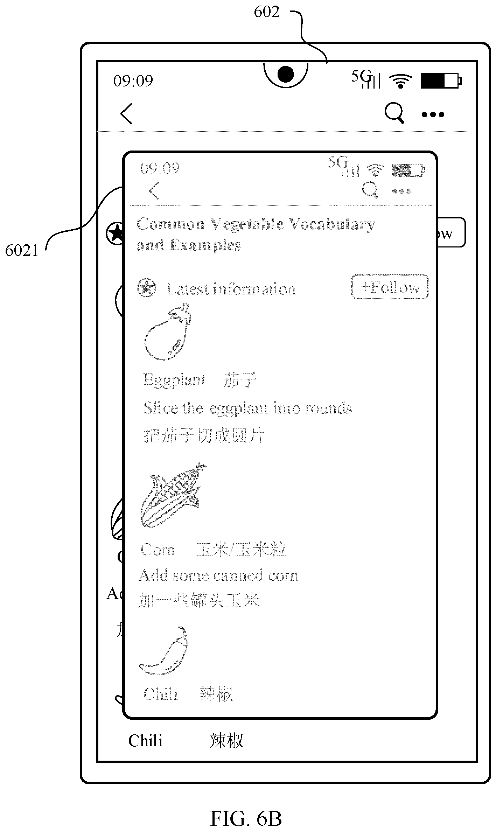

As shown in FIG. 6A, a user interface 601 is a web page interface. The electronic device may detect a user operation on the user interface 601. In response to the user operation, the electronic device may extract text in the user interface 601, and store the text in the note-taking application (for example, the Notepad application and the Notes application). In addition, the electronic device may further display a corresponding animation. For an animation effect, refer to FIG. 6B-FIG. 6F. Specifically, as shown in FIG. 6B-FIG. 6F, a user interface 602 may include a display area 6021, a user interface 603 may include a display area 6031, a user interface 604 may include a display area 6041, a user interface 605 may include a display area 6051, and a user interface 606 may include a display area 6061. The display area 6021, the display area 6031, and the display area 6041 are gradually reduced web page interfaces. In addition, the display area 6031 and the display area 6041 include an incomplete web page interface, and there is web page collection prompt information in the display area 6051 and the display area 6061. Compared with the display area 6061, the display area 6051 is covered with a mask, indicating that web page collection is not completed when the electronic device displays the user interface 605. It may be understood that when the electronic device displays the user interface 606, the electronic device has completed collection of the web page shown in the user interface 601.

It may be understood that the electronic device may detect a user operation on the display area 6061. In response to the user operation, the electronic device may display text in a web page interface (for example, the user interface 601) stored in the note-taking application.

It should be noted that webpage collection in this application means extracting text on a web page and storing the extracted text in the note-taking application.

It may be understood that the user interfaces shown in FIG. 1A-FIG. 1L, FIG. 2A-FIG. 2S, FIG. 3A-FIG. 3L, FIG. 4A-FIG. 4G, FIG. 5AFIG. 5C, and FIG. 6A-FIG. 6F are merely examples provided in this application, and should not be considered as limitations on this application.

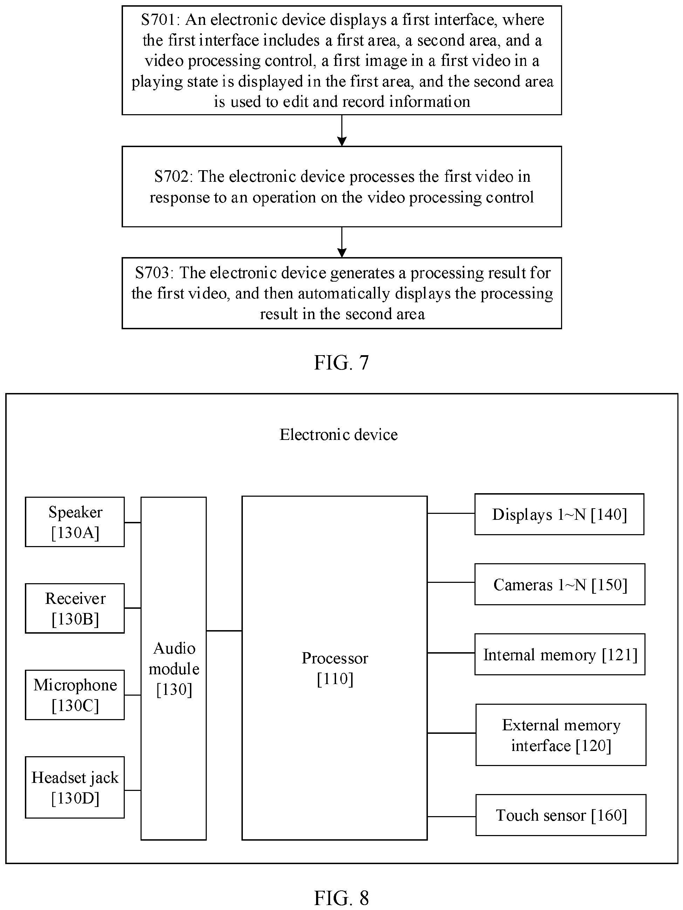

**FIG. 7** **is an example flowchart of an information processing method according to an embodiment of this application.**

In some possible cases, for an example process involved in recording information by an electronic device, refer to the following descriptions of steps S701-S703.

S701: The electronic device displays a first interface, where the first interface includes a first area, a second area, and a video processing control, a first image in a first video in a playing state is displayed in the first area, and the second area is used to edit and record information.

It may be understood that the first area may be an area that is involved in the foregoing content and in which a video (for example, a video S) in a playing state is displayed. The second area may be an area (for example, a note interface) that is used to edit and record information and that is involved in the foregoing content. For example, the second area may be an initialization interface involved after a new note is created. The video processing control is used to trigger the electronic device to process the first video in the first area (for example, capture a picture in the first video, collect a sound of the first video, and convert the sound into text, and extract text in an image included in the first video), and automatically display a corresponding processing state (for example, the captured image, the text obtained through conversion, and the extracted text) in the second area.

It should be noted that the second area may include several editing options (for example, a "List" option, a "Style" option, an "Add" option, a "Record" option, and a "Handwriting" option). The several editing options may be used to record information in the second area and edit recorded information. For example, the "Style" option may be used to change a style of recorded information in the first area, and may be further used to change a style for recording subsequent information.

In a possible implementation, the first interface may be the user interface 104 shown in FIG. 1D in the foregoing content, the first area may be the video play area shown in FIG. 1D, and the second area may be the floating window 1042.

In another possible implementation, the first interface may be the user interface 105 shown in FIG. 1E in the foregoing content, the first area may be the area 1, or the first area may be a video play area (for example, the video play area 20211), that is, an area in which a video picture is displayed, the second area may be the area 2, the first video may be a video (that is, the video S) that is being played in the area 1, and the first image may be an image displayed in a video play area in the area 1.

It may be understood that the video processing control may include any one or more of the recording start control 10411, the screenshot control 10412, the voice-to-text conversion control 10413, and the text extraction control 10414 in the foregoing content.

It may be understood that for related descriptions of the first interface, refer to the foregoing descriptions of FIG. 1D and FIG. 1E. Details are not described herein again.

S702: The electronic device processes the first video in response to an operation on the video processing control.

It may be understood that specific content of processing the first video by the electronic device varies with the video processing control.

For example, when the video processing control includes the recording start control 10411, that the electronic device processes the first video may include: The electronic device records an image displayed in the video play area 20211.

For example, when the video processing control includes the screenshot control 10412, that the electronic device processes the first video may include: The electronic device captures an image displayed in the video play area 20211.

For example, when the video processing control includes the voice-to-text conversion control 10413, that the electronic device processes the first video may include: The electronic device collects sound information of the video S in the video play area 20211, and converts the sound information into text.

For example, when the video processing control includes the text extraction control 10414, that the electronic device processes the first video may include: The electronic device extracts text in an image displayed in the video play area 20211, and displays the text in an editable form in the video play area 20211.

It should be noted that the video processing control may include a plurality of controls, and processing of the first video by the electronic device may include a plurality of pieces of content.

S703: The electronic device generates a processing result for the first video, and then automatically displays the processing result in the second area.

It may be understood that the electronic device generates the processing result for the first video, and then may automatically display the processing result in the second area. In a process in which the electronic device processes the first video, a current processing status may be automatically displayed in the second area, or a current processing status may not be automatically displayed in the second area.

For related content related to step S702 and step S703, refer to the foregoing descriptions of related content of the functions 1-4. Details are not described herein again. For example interfaces related to step S702 and step S703, refer to the foregoing descriptions of related content in FIG. 2A-FIG. 2S and FIG. 4A-FIG. 4G. Details are not described herein again.

**The following describes an apparatus in embodiments of this application.**

FIG. 8 is a schematic diagram of a structure of an electronic device according to an embodiment of this application.

The electronic device may include a processor 110, an external memory interface 120, an internal memory 121, an audio module 130, a speaker 130A, a receiver 130B, a microphone 130C, a headset jack 130D, a display 140, a camera 150, and a touch sensor 160.

The structure shown in this embodiment of the present invention does not constitute a specific limitation on the electronic device. In some other embodiments of this application, the electronic device may include more or fewer components than those shown in the figure, or combine some components, or split some components, or have different component arrangements. The components shown in the figure may be implemented by using hardware, software, or a combination of software and hardware. An interface connection relationship between the modules shown in this embodiment of the present invention is merely an example for description, and does not constitute a limitation on the structure of the electronic device.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). A memory may be further disposed in the processor 110 to store instructions and data.

The electronic device implements a display function by using the GPU, the display 140, the application processor, and the like.

The GPU is a microprocessor for image processing, and is connected to the display 140 and the application processor. The GPU is configured to perform mathematical and geometric calculation for graphics rendering. The processor 110 may include one or more GPUs that execute program instructions to generate or change displayed information. The display 140 is configured to display an image, a video, or the like. In some embodiments, the electronic device may include one or N displays 140, where N is a positive integer greater than 1.

In this embodiment of this application, a capability of displaying, by the electronic device, the user interfaces shown in FIG. 1A-FIG. 1L, FIG. 2A-FIG. 2S, FIG. 3A-FIG. 3L, FIG. 4A-FIG. 4G, FIG. 5AFIG. 5C, and FIG. 6A-FIG. 6F depends on a display function provided by the GPU, the display 140, and the application processor.

The camera 150 is configured to capture a still image or a video. The ISP is configured to process data fed back by the camera 150. Light is transferred to a camera photosensitive element through a lens. An optical signal is converted into an electrical signal. The camera photosensitive element transfers the electrical signal to the ISP for processing, to convert the electrical signal into an image visible to naked eyes. The electronic device may include one or N cameras 150, where N is a positive integer greater than 1. The video codec is configured to compress or decompress a digital video. The electronic device may support one or more video codecs. In this way, the electronic device can play or record videos in a plurality of encoding formats, for example, moving picture experts group (moving picture experts group, MPEG) 1, MPEG2, MPEG3, and MPEG4.

The internal memory 121 may include one or more random access memories (random access memory, RAM) and one or more non-volatile memories (non-volatile memory, NVM). The processor 110 may directly perform reading from or writing into the random access memory. The random access memory may be configured to store an executable program (for example, machine instructions) of an operating system or another running program, and may be further configured to store data of a user and data of an application, and the like. The non-volatile memory may also store the executable program, the data of the user, and the data of the application, and the like, which may be loaded into the random access memory in advance for directly reading and writing by the processor 110.

In this embodiment of this application, code for implementing the information processing method in the embodiments of this application may be stored in the non-volatile memory. When running a camera application, the electronic device may load the executable code stored in the non-volatile memory into the random access memory.

The external memory interface 120 may be configured to be connected to an external non-volatile memory, to expand a storage capability of the electronic device.

The electronic device may implement an audio function by using the audio module 130, the speaker 130A, the receiver 130B, the microphone 130C, the headset jack 130D, the application processor, and the like.

The audio module 130 is configured to convert digital audio information into an analog audio signal for output, and is further configured to convert an analog audio input into a digital audio signal. The speaker 130A, also referred to as a "loudspeaker", is configured to convert an audio electrical signal into a sound signal. The receiver 130B, also referred to as an "earpiece", is configured to convert an audio electrical signal into a sound signal. The microphone 130C, also referred to as a "mic" or "mike", is configured to convert a sound signal into an electrical signal. The headset jack 130D is configured to be connected to a wired headset.

In this embodiment of this application, when enabling a voice-to-text conversion function, the electronic device may enable the microphone 130C to collect a sound signal, and convert the sound signal into corresponding text.

The touch sensor 160 is also referred to as a "touch device". The touch sensor 160 may be disposed on the display 140. The touch sensor 160 and the display 140 form a touchscreen, which is also referred to as a "touch control screen". The touch sensor 160 is configured to detect a touch operation performed on or near the touch sensor 160. The touch sensor may transfer the detected touch operation to the application processor to determine a type of a touch event. A visual output related to the touch operation may be provided by using the display 140. In some other embodiments, the touch sensor 160 may alternatively be disposed on a surface of the electronic device at a location different from that of the display 140.

In this embodiment of this application, the electronic device may detect, by using the touch sensor 160, an operation such as a tap operation or a sliding operation performed by a user on the display 140, to implement the information processing method shown in FIG. 1A-FIG. 1L, FIG. 2A-FIG. 2S, FIG. 3A-FIG. 3L, FIG. 4A-FIG. 4G, FIG. 5AFIG. 5C, and FIG. 6A-FIG. 6F.

The foregoing embodiments are merely used to describe the technical solutions of this application, but are not used to limit this application. Although this application is described in detail with reference to the foregoing embodiments, it should be understood by a person of ordinary skill in the art that the technical solutions described in the foregoing embodiments may still be modified, or some technical features thereof are equivalently replaced. These modifications or replacements do not make the essence of the corresponding technical solutions depart from the scope of the technical solutions of the embodiments of this application.

## Claims

1. An information processing method, wherein the method comprises:
displaying, by an electronic device, a first interface, wherein the first interface comprises a first area, a second area, and a video processing control, a first image in a first video in a playing state is displayed in the first area, and the second area is used to edit and record information;
processing, by the electronic device, the first video in response to an operation on the video processing control; and
generating, by the electronic device, a processing result for the first video, and then automatically displaying the processing result in the second area.

2. The method according to claim 1, wherein before the generating, by the electronic device, a processing result for the first video, and then automatically displaying the processing result in the second area, the method further comprises:
automatically displaying a current processing status in the second area in a process in which the electronic device processes the first video.

3. The method according to claim 2, wherein the video processing control comprises a first control in a first state; and the processing, by the electronic device, the first video in response to an operation on the video processing control specifically comprises: in response to an operation on the first control in the first state, switching, by the electronic device, a status of the first control to a second state, and recording an image that is in the first video and that is displayed in the first area;
the automatically displaying a current processing status in the second area in a process in which the electronic device processes the first video specifically comprises: automatically displaying a first card in the second area in a process in which the electronic device records the image that is in the first video and that is displayed in the first area;
the generating, by the electronic device, a processing result for the first video specifically comprises: in response to an operation on the first control in the second state, switching, by the electronic device, the status of the first control to the first state, stopping recording the image in the first area, and generating a second video; and
the automatically displaying the processing result in the second area specifically comprises: automatically displaying the second video in the first card.

4. The method according to claim 1, wherein the video processing control comprises a first control in a first state; and the processing, by the electronic device, the first video in response to an operation on the video processing control specifically comprises: in response to an operation on the first control in the first state, switching, by the electronic device, a status of the first control to a second state, and recording an image that is in the first video and that is displayed in the first area;
the generating, by the electronic device, a processing result for the first video specifically comprises: in response to an operation on the first control in the second state, switching, by the electronic device, the status of the first control to the first state, stopping recording the image in the first area, and generating a second video; and
the automatically displaying the processing result in the second area specifically comprises: automatically displaying the second video in a first card in the second area.

5. The method according to claim 3 or 4, wherein the method further comprises:
displaying, by the electronic device, a second control in a third state in response to an operation on the first control in the first state; and
in the process of recording the image that is in the first video and that is displayed in the first area, in response to an operation on the second control in the third state, switching, by the electronic device, a status of the second control to a fourth state, and displaying several color options, and in response to an operation on the image that is in the first video and that is displayed in the first area, displaying a doodle mark in a first color on the image in the first video, wherein the first color is a default color option in the several color options, wherein
the second video comprises an image that comprises the doodle mark in the first color.

6. The method according to any one of claims 3-5, wherein the method further comprises:
displaying, by the electronic device, a third control in response to an operation on the first control in the first state; and
at a first moment in the process of recording the image that is in the first video and that is displayed in the first area, in response to an operation on the third control, adding, by the electronic device, a first time label and a first text addition area to the first card, wherein the first moment is displayed on the first time label, and the first text addition area is used to input text.

7. The method according to any one of claims 3-6, wherein the method further comprises:
displaying, by the electronic device, a fourth control in response to an operation on the first control in the first state; and
at a second moment, at which a second image is displayed in the first area, in the process of recording the image that is in the first video and that is displayed in the first area, in response to an operation on the fourth control, capturing, by the electronic device, the second image, and automatically adding the second image to the first card.

8. The method according to claim 7, wherein the method further comprises:
at the second moment in the process of recording the image that is in the first video and that is displayed in the first area, in response to an operation on the fourth control, adding, by the electronic device, a second time label and a second text addition area to the first card, wherein the second moment is displayed on the second time label, and the second text addition area is used to input text.

9. The method according to any one of claims 3-8, wherein the method further comprises:
displaying, by the electronic device, a fifth control in a fifth state in the process of recording the image that is in the first video and that is displayed in the first area;
switching, by the electronic device, a status of the fifth control to a sixth state in response to an operation on the fifth control in the fifth state; and
when the electronic device displays the fifth control in the sixth state, collecting, by the electronic device, a first voice, and displaying, in the first card, text obtained by converting the first voice.

10. The method according to any one of claims 3-9, wherein the method further comprises:
displaying, by the electronic device, a sixth control in a seventh state in the process of recording the image that is in the first video and that is displayed in the first area;
at a third moment at which a third image in the first video is displayed in the first area, in response to an operation on the sixth control in the seventh state, switching, by the electronic device, a status of the sixth control to an eighth state, extracting text in the third image, and displaying a first text area in the first area, wherein the first text area comprises the text that is in the third image and that is extracted by the electronic device; and
at a fourth moment at which when the electronic device displays the sixth control in the eighth state, a fourth image in the first video is displayed in the first area, and the first text area is displayed in the first area, in response to an operation on the first text area, displaying, by the electronic device, several editing options, wherein the several editing options are used to edit text in the first text area, and the fourth moment is later than the third moment.

11. The method according to any one of claim 1 or claims 3-10, wherein the video processing control comprises the fourth control; and the processing, by the electronic device, the first video in response to an operation on the video processing control; and generating, by the electronic device, a processing result for the first video, and then automatically displaying the processing result in the second area specifically comprise:
at a fifth moment at which a fifth image in the first video is displayed in the first area, in response to an operation on the fourth control, capturing, by the electronic device, the fifth image, and automatically adding the fifth image to a non-card area in the second area.

12. The method according to any one of claims 2-11, wherein the video processing control comprises the fifth control in the fifth state; and the processing, by the electronic device, the first video in response to an operation on the video processing control specifically comprises: in response to an operation on the fifth control in the fifth state, switching, by the electronic device, the status of the fifth control to the sixth state, collecting a voice of the first video, and converting the voice into text;
the automatically displaying a current processing status in the second area in a process in which the electronic device processes the first video specifically comprises: automatically displaying a second card in the second area in a process of collecting the voice of the first video and converting the voice into text, wherein text currently obtained by the electronic device through conversion is displayed in the second card;
the generating, by the electronic device, a processing result for the first video specifically comprises: in response to an operation on the fifth control in the sixth state, switching, by the electronic device, the status of the fifth control to the fifth state, stopping collecting the voice of the first video, and generating first text; and
the automatically displaying the processing result in the second area specifically comprises: automatically displaying the first text in the second card, wherein the first text is text obtained by converting the voice that is of the first video and that is collected by the electronic device.

13. The method according to any one of claim 1 or claims 3-11, wherein the video processing control comprises the fifth control in the fifth state; and the processing, by the electronic device, the first video in response to an operation on the video processing control specifically comprises: in response to an operation on the fifth control in the fifth state, switching, by the electronic device, the status of the fifth control to the sixth state, collecting a voice of the first video, and converting the voice into text;
the generating, by the electronic device, a processing result for the first video specifically comprises: in response to an operation on the fifth control in the sixth state, switching, by the electronic device, the status of the fifth control to the fifth state, and generating first text, wherein the first text is text obtained by converting the collected voice of the first video; and
the automatically displaying the processing result in the second area specifically comprises: automatically displaying the first text in a second card in the second area.

14. The method according to any one of claim 1 or claims 3-13, wherein the video processing control comprises the sixth control in the seventh state; and the processing, by the electronic device, the first video in response to an operation on the video processing control specifically comprises:
at a sixth moment at which a sixth image in the first video is displayed in the first area, in response to an operation on the sixth control in the seventh state, switching, by the electronic device, the status of the sixth control to the eighth state, extracting text in the sixth image, and automatically displaying a second text area in the first area;
the generating, by the electronic device, a processing result for the first video specifically comprises: determining, by the electronic device, to-be-inserted text in response to an operation on the second text area, wherein the second text area comprises the text that is in the sixth image and that is extracted by the electronic device; and
the automatically displaying the processing result in the second area specifically comprises: automatically displaying the to-be-inserted text in the second area.

15. The method according to claim 14, wherein after the automatically displaying a second text area in the first area, the method further comprises:
at a seventh moment, when the electronic device displays the sixth control in the eighth state, a seventh image in the first video is displayed in the first area, and the second text area is displayed in the first area, wherein the seventh moment is later than the sixth moment.

16. The method according to any one of claims 3-15, wherein the video processing control comprises the sixth control in the seventh state, and the method comprises:
at an eighth moment at which an eighth image in the first video is displayed in the first area, in response to an operation on the sixth control in the seventh state, switching, by the electronic device, the status of the sixth control to the eighth state, extracting text in the eighth image, and automatically displaying a third text area in the first area, wherein the third text area comprises the text that is in the eighth image and that is extracted by the electronic device; and
displaying, by the electronic device, several editing options in response to an operation on the third text area, wherein the several editing options are used to edit text in the third text area.

17. The method according to claim 6, wherein the method further comprises:
in response to an operation on the first time label, displaying a ninth image in the second video in the first card through a jump, wherein the ninth image is an image displayed in the first video at the first moment, and the second video is a video obtained by recording the image that is in the first video and that is displayed in the first area.

18. The method according to claim 8, wherein the method further comprises:
in response to an operation on the second time label, displaying the second image in the second video in the first card through a jump, wherein the second image is an image displayed in the first video at the second moment, and the second video is a video obtained by recording the image that is in the first video and that is displayed in the first area.

19. The method according to any one of claims 1-18, wherein the displaying, by an electronic device, a first interface specifically comprises:
displaying, by the electronic device, the first interface in response to an operation on a second interface, wherein
a picture in the first video in a first application is displayed in the first area and the second interface.

20. The method according to any one of claims 1-18, wherein before the displaying, by an electronic device, a first interface, the method comprises:
displaying, by the electronic device, a fourth interface in response to an operation on a seventh control in a third interface, wherein content of a second application is displayed in the third interface and the second area, the fourth interface comprises a third area and the second area, and content of a first application is displayed in the third area; and
the displaying, by an electronic device, a first interface specifically comprises:
displaying, by the electronic device, the first interface in response to an operation on a first play entry in the third area.

21. An information processing method, wherein the method comprises:
displaying, by an electronic device, a first web page; and
in response to an operation on the first web page, extracting, by the electronic device, text on the first web page, and automatically storing the extracted text on the first web page in a second application.

22. An electronic device, comprising one or more memories and one or more processors, wherein the memory is configured to store a computer program; and the processor is configured to invoke the computer program, to enable the electronic device to perform the method according to any one of claims 1-20.

23. An electronic device, comprising one or more memories and one or more processors, wherein the memory is configured to store a computer program; and the processor is configured to invoke the computer program, to enable the electronic device to perform the method according to claim 21.

24. A computer storage medium, comprising computer instructions, wherein when the computer instructions are run on an electronic device, the electronic device is enabled to perform the method according to any one of claims 1-20.

25. A computer storage medium, comprising computer instructions, wherein when the computer instructions are run on an electronic device, the electronic device is enabled to perform the method according to claim 21.
